# EUROPEAN PATENT SPECIFICATION

(11) **EP 3 165 546 B1**
(45) Date of publication and mention of the grant of the patent: **04.09.2019**
(21) Application number: 15814639.9
(22) Date of filing: 02.07.2015
(51) Int. Cl.: C08F 293/00, C08F 8/12, C08F 234/02, C08L 53/00, H01B 1/06, H01M 4/86, H01M 8/02, H01M 8/10

(54) **ELECTROLYTE MATERIAL, LIQUID COMPOSITION, MEMBRANE ELECTRODE ASSEMBLY FOR SOLID POLYMER FUEL CELL, AND FLUORINATED BRANCHED POLYMER**
ELEKTROLYTMATERIAL, FLÜSSIGZUSAMMENSETZUNG, MEMBRANELEKTRODENANORDNUNG FÜR FESTPOLYMERBRENNSTOFFZELLEN UND FLUORHALTIGES VERZWEIGTES POLYMER
MATÉRIAU D'ÉLECTROLYTE, COMPOSITION LIQUIDE, ENSEMBLE MEMBRANE-ÉLECTRODE POUR PILE À COMBUSTIBLE À POLYMÈRE SOLIDE, ET POLYMÈRE FUORÉ RAMIFIÉ

(30) Priority: 04.07.2014 JP 2014138978
(43) Date of publication of application: 10.05.2017
(73) Proprietor: AGC Inc., Tokyo 100-8405 (JP)
(72) Inventor: WATAKABE, Atsushi, Tokyo 100-8405 (JP); HIRAI, Takeshi, Tokyo 100-8405 (JP); HOMMRA, Satoru, Tokyo 100-8405 (JP)
(74) Representative: Müller-Boré & Partner Patentanwälte PartG mbB
(86) International application number: PCT/JP2015/069155
(87) International publication number: WO 2016/002889

(56) References cited:
- EP-A1- 1 806 371
- EP-A1- 2 436 705
- EP-A1- 2 460 835
- WO-A1-2006/046620
- WO-A1-2007/069543
- WO-A1-2010/137627
- WO-A1-2011/013578
- JP-A- H06 223 842
- JP-A- H11 329 062
- JP-A- 2004 010 744
- JP-A- 2006 244 994
- JP-A- 2006 522 432
- JP-A- 2011 102 340
- JP-A- 2014 506 275

## Description

### TECHNICAL FIELD

The present invention relates to an electrolyte material, a liquid composition comprising the electrolyte material, a membrane electrode assembly for a polymer electrolyte fuel cell containing the electrolyte material in a catalyst layer of a cathode, and a fluorinated branched polymer which may be used e.g. as a raw material of the electrolyte material.

### BACKGROUND ART

A polymer electrolyte fuel cell is, for example, one wherein a membrane electrode assembly is sandwiched between two separators to form a cell, and a plurality of such cells are stacked. The membrane electrode assembly is one comprising an anode having a catalyst layer, a cathode having a catalytic layer and a polymer electrolyte membrane disposed between the anode and the cathode.

The polymer electrolyte fuel cell is required to exhibit sufficient power generation characteristics (output voltage, etc.). In particular, in the polymer electrolyte fuel cell, an expensive catalyst containing platinum, etc. is often used, and in order to reduce the cost, it is required to exhibit sufficient power generation characteristics with a small amount of platinum.

In the reaction in the polymer electrolyte fuel cell, the oxygen reduction reaction in the cathode catalyst layer is said to be rate limiting, and in order to promote the reaction, it is necessary to increase the oxygen concentration in the cathode catalyst layer. For example, when using a catalyst containing platinum, if the platinum amount of the catalyst is small, as compared with a case where the platinum amount is large, it is necessary to increase the reaction rate per unit platinum surface area, and it is therefore necessary to increase the oxygen permeability of an electrolyte material covering the platinum surface.

As electrolyte materials having high oxygen permeability, the following ones have been proposed.
(1) A linear block copolymer comprising a segment A composed of a perfluoropolymer having sulfonic acid groups and a segment B composed of a perfluoropolymer having alicyclic structures (Patent Document 1).
(2) A random copolymer or linear block copolymer having a structural unit derived from a perfluoromonomer having a sulfonic acid group and a structural unit derived from a perfluoromonomer having an alicyclic structure, and having an oxygen permeability coefficient of at least 5×10⁻¹² [cm³ (Normal)·cm/cm²·s·Pa] (Patent Document 2).
(3) A random copolymer having a structural unit derived from a perfluoromonomer having two ionic groups in one pendant group, and a structural unit derived from a perfluoromonomer having a 5-membered ring, and having a density of at most 2.03 g/cm³ (Patent Document 3).

However, even by the electrolyte materials of the above (1) to (3), especially when the platinum amount is small, the oxygen permeability is insufficient. Therefore, also the power generation characteristics of the polymer electrolyte fuel cell cannot be said to be sufficient.

### PRIOR ART DOCUMENTS

### PATENT DOCUMENTS

Patent Document 1: JP-A-2002-216804
Patent Document 2: JP-A-2003-036856
Patent Document 3: WO2011/013578

### DISCLOSURE OF INVENTION

### TECHNICAL PROBLEM

It is an object of the present invention to provide an electrolyte material having high oxygen permeability as compared with conventional ones; a membrane electrode assembly for a polymer electrolyte fuel cell excellent in power generation characteristics as compared with conventional ones; a liquid composition suitable for forming a catalyst layer for the membrane electrode assembly; and a fluorinated branched polymer useful as e.g. a raw material of the electrolyte material.

### SOLUTION TO PROBLEM

The electrolyte material of the present invention is an electrolyte material comprising a fluoropolymer (H) having a structural unit (u1) having an ionic group and a structural unit (u2) having an alicyclic structure (but excluding one having an ionic group), characterized in that the fluoropolymer (H) comprises a branched molecular chain, the fluoropolymer (H) has a fluorinated segment (A) (hereinafter referred to simply as segment (A)) comprising a molecular chain having a structural unit (u1) having an ionic group, and a fluorinated segment (B) (hereinafter referred to simply as segment (B)) comprising a molecular chain having a structural unit (u2) having an alicyclic structure, and the ion exchange capacity of the segment (B) is smaller than the ion exchange capacity of the segment (A).

The segment (B) preferably has no structural unit (u1) having an ionic group.

The segment (B) is preferably composed of a branched molecular chain.

The segment (B) is preferably one formed by polymerizing a monomer component (β) containing a monomer component of either one or both of a monomer (m2) having an alicyclic structure (but excluding one having an ionic group or its precursor group) and a monomer (m2') capable of forming an alicyclic structure by cyclopolymerization (but excluding one having an ionic group or its precursor group), and a monomer (m3) having an iodine atom.

The fluoropolymer (H) is preferably one obtained by polymerizing a monomer component (α) containing a monomer (m1) having a precursor group for an ionic group, in the presence of a polymer (B') formed by polymerizing a monomer component (β) containing a monomer component of either one or both of a monomer (m2) having an alicyclic structure (but excluding one having an ionic group or its precursor group) and a monomer (m2') capable of forming an alicyclic structure by cyclopolymerization (but excluding one having an ionic group or its precursor group), and a monomer (m3) having an iodine atom, and then converting the precursor group for an ionic group to the ionic group.

The fluoropolymer (H) is preferably a perfluoropolymer.

The ion-exchange capacity of the segment (A) is preferably at least 1 meq/g dry resin.

The ion exchange capacity of the fluoropolymer (H) is preferably from 0.6 to 2.5 meq/g dry resin.

The structural unit (u2) having an alicyclic structure is preferably at least one member selected from the group consisting of a structural unit represented by the following formula (u21) and a structural unit represented by the following formula (u22): 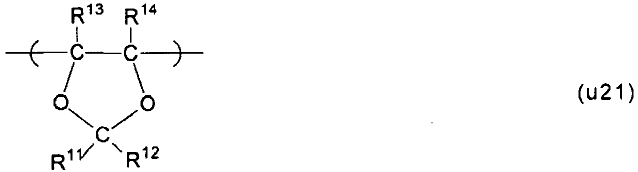 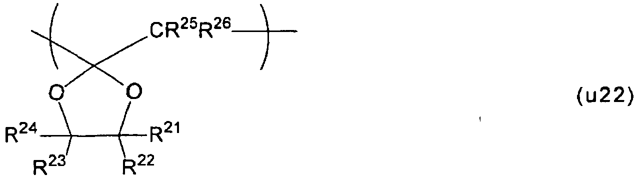 wherein R¹¹ and R¹² are each independently a fluorine atom or a C₁₋₅ perfluoroalkyl group, R¹³ and R¹⁴ are each independently a fluorine atom, a C₁₋₅ perfluoroalkyl group or a C₁₋₅ perfluoroalkoxy group, and R²¹ to R²⁶ are each independently a monovalent perfluorinated organic group which may have an etheric oxygen atom, or a fluorine atom.

The structural unit (u2) having an alicyclic structure more preferably contains a structural unit represented by the formula (u21), and the proportion of the structural unit represented by the formula (u21) is at least 70 mass% in all structural units (100 mass%) constituting the segment (B).

The softening temperature of the segment (A) is preferably at most 180°C.

The softening temperature of the segment (B) is preferably higher than the softening temperature of the segment (A).

The ionic group is preferably a sulfonic acid group or its salt.

The liquid composition of the present invention is characterized by comprising a dispersion medium containing either one or both of water and an alcohol, and the electrolyte material of the present invention dispersed in the dispersion medium.

The membrane electrode assembly for a polymer electrolyte fuel cell of the present invention comprises an anode having a catalyst layer, a cathode having a catalyst layer, and a polymer electrolyte membrane disposed between the anode and the cathode, characterized in that the catalyst layer of the cathode contains the electrolyte material of the present invention.

The fluorinated branched polymer of the present invention useful for an application to e.g. the segment (B), is characterized in that it is composed of a branched molecular chain having a structural unit (u2) having an alicyclic structure (but excluding one having an ionic group).

The fluorinated branched polymer of the present invention is preferably one obtained by polymerizing a monomer component (β) comprising either one or both of a monomer (m2) having an alicyclic structure (but excluding one having an ionic group or its precursor group) and a monomer (m2') capable of forming an alicyclic structure by cyclopolymerization (but excluding one having an ionic group or its precursor group), and a monomer (m3) having an iodine atom.

The fluorinated branched polymer of the present invention is preferably a perfluoropolymer.

The fluorinated branched polymer of the present invention is further preferably one wherein the structural unit (u2) having an alicyclic structure contains a structural unit represented by the following formula (u21), and the proportion of the structural unit represented by the formula (u21) is at least 70 mass% in all structural units (100 mass%) constituting the fluorinated branched polymer: 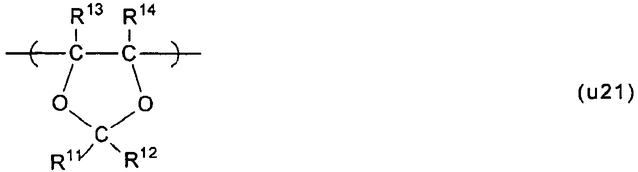 wherein R¹¹ and R¹² are each independently a fluorine atom or a C₁₋₅ perfluoroalkyl group, and R¹³ and R¹⁴ are each independently a fluorine atom, a C₁₋₅ perfluoroalkyl group or a C₁₋₅ perfluoroalkoxy group.

### ADVANTAGEOUS EFFECTS OF INVENTION

The electrolyte material of the present invention has a high oxygen permeability as compared with conventional ones. The membrane electrode assembly for a polymer electrolyte fuel cell of the present invention has excellent power generation characteristics as compared with conventional ones. The liquid composition of the present invention is suitable for forming a catalyst layer of the membrane electrode assembly of the present invention. The fluorinated branched polymer of the present invention useful for application to e.g. the segment (B) is useful as e.g. a raw material of the electrolyte material of the present invention.

### BRIEF DESCRIPTION OF DRAWINGS

Fig. 1 is a schematic diagram showing an example of the fluoropolymer (H).
Fig. 2 is a schematic view showing an example of the polymer (B') being the origin of the segment (B).
Fig. 3 is a part of a ¹⁹F-NMR chart of the polymer (B') being the origin of the segment (B) containing a structural unit (u21-1).
Fig. 4 is a cross-sectional view showing an example of a membrane electrode assembly for the polymer electrolyte fuel cell of the present invention.
Fig. 5 is a cross-sectional view showing another example of a membrane electrode assembly for the polymer electrolyte fuel cell of the present invention.
Fig. 6 is a graph showing the humidity dependency of the relative value of the oxygen permeability coefficient of the membrane of the polymer (H-1) (Ex. 1), the membrane of the polymer (H'-2) (Ex. 2), the membrane of the polymer (H'-4) (Ex. 4) to the oxygen permeability coefficient of the membrane of the polymer (H'-5).
Fig. 7 is a graph showing the temperature dependency of the storage modulus and tanδ of the membrane of the polymer (H-1) (Ex. 1).

### DESCRIPTION OF EMBODIMENTS

The following expressions and definitions of terms apply, unless otherwise noted, throughout the specification including claims.

A unit represented by the formula (u11) will be referred to as a structural unit (u11). Units represented by other formulas will be referred to in the same manner.

A monomer represented by the formula (m11) will be referred to as a monomer (m11). Compounds represented by other formulas will be referred to in the same manner.

A group represented by the formula (g1) will be referred to as a group (g1). Groups represented by other formulas will be referred to in the same manner.

A "structural unit" means a unit derived from a monomer, as formed by radical polymerization of the monomer. The structural unit may be a unit which is directly formed by a polymerization reaction, or may be a unit formed by treating a polymer to convert a part of a unit to another structure. Such treatment includes treatment to convert a precursor group for an ionic group to the ionic group, ion-exchange treatment, aqueous hydrogen peroxide solution treatment of a polymer, heat drying treatment of a polymer in air, in an inert gas atmosphere, or in vacuo, treatment to stabilize a polymer by fluorination, and treatment to replace an iodine atom to a hydrogen atom by e.g. a radical reaction using light or a radical initiator.

A "monomer" is a compound having a polymerizable carbon-carbon double bond.

An "ionic group" is a group having H⁺, a monovalent metal cation, an ammonium ion, etc.

A "precursor group" is a group which can be converted to an ionic group by a known treatment, such as hydrolysis treatment or acid-form conversion treatment. As the precursor group, a -SO₂F group, etc. may be mentioned.

A "fluoropolymer" means a polymer having fluorine atoms bonded to carbon atoms.

A "perfluoromonomer" means a monomer wherein all of hydrogen atoms bonded to carbon atoms are replaced by fluorine atoms.

A "perfluoropolymer" means a polymer wherein the proportion of the number of carbon-fluorine atoms to the sum of the number of carbon-halogen bonds and the number of carbon-hydrogen bonds in the polymer, is at least 95%. The proportion of the number of carbon-fluorine atoms to the sum of the number of carbon-halogen bonds and the number of carbon-hydrogen bonds in the polymer, can be calculated, for example, by using measurement results of the elemental analysis.

A "perfluoroalkyl group" means a group wherein all of hydrogen atoms in an alkyl group are replaced by fluorine atoms.

A "perfluoroalkylene group" means a group wherein all of hydrogen atoms in an alkylene group are replaced by fluorine atoms.

A "molecular chain" is meant for whole or part of a polymer or segment constituted by structural units linked linearly or in a branched-form, between terminal groups, branch points or boundary constituting units.

A "branched molecular chain" means a molecular chain composed of structural units linked in a branched-form at least at one branch point. A molecular chain composed of structural units linked linearly wherein the structural units have pendant groups (side branches which are not side chains composed of a plurality of structural units) is not a branched molecular chain.

A "branch point" means, when a molecular chain made of a chain of structural units formed by polymerization, contains a structural unit to which another molecular chain is bonded as a side chain moiety, such a structural unit.

A "block copolymer" means a polymer composed of a plurality of segments (blocks) linked linearly.

A "segment" means a non-branched molecular chain or branched molecular chain to contribute to the formation of one phase in a phase-separated polymer.

### <Electrolyte material>

The electrolyte material of the present invention is made of a fluoropolymer (H) having a structural unit (u1) having an ionic group (hereinafter simply referred to also as a structural unit (u1)) and a structural unit (u2) having an alicyclic structure (hereinafter simply referred to also as a structural unit (u2)).

### (Fluoropolymer (H))

The fluoropolymer (H) is a polymer satisfying all of the following requirements (1) to (3).
(1) It comprises a branched molecular chain.
(2) It has a segment (A) comprising a molecular chain having a structural unit (u1), and a segment (B) comprising a molecular chain having a structural unit (u2).
(3) The ion exchange capacity of the segment (A) is larger than the ion exchange capacity of the segment (B).

The fluoropolymer (H) is, from the viewpoint of durability, preferably a perfluoropolymer.

The ion exchange capacity of the fluoropolymer (H) is preferably from 0.6 to 2.5 meq/g dry resin, more preferably from 1.0 to 2.0 meq/g dry resin. When the ion exchange capacity is at least 0.6 meq/g dry resin, the electrical conductivity of the fluoropolymer (H) becomes high, whereby the power generation characteristics of the membrane electrode assembly of the polymer electrolyte fuel cell will be further excellent. When the ion exchange capacity is at most 2.5 meq/g dry resin, the fluoropolymer (H) will not swell excessively with water.

In order to adjust the ion exchange capacity of the fluoropolymer (H) to be within the above range, the proportion of the monomer (m1) having a precursor group for an ionic group (hereinafter simply referred to also as the monomer (m1)) may be adjusted at the time of producing the polymer (F) as described later.

The mass average molecular weight of the fluoropolymer (H) is preferably from 20,000 to 5,000,000, more preferably from 50,000 to 1,000,000, particularly preferably from 80,000 to 500,000. When the mass average molecular weight is at least 20,000, it is possible to prevent the excessive swelling in water or the change with time of the swelling degree, such being desirable. When the mass average molecular weight is at most 5,000,000, dispersion in a solvent becomes possible, such being desirable.

The mass average molecular weight of the polymer can be determined as a mass average molecular weight calculated as polymethyl methacrylate by using a GPC measuring device.

### Branched molecular chain:

The fluoropolymer (H) composed of a branched molecular chain may, for example, be the following.
(a) A branched multi-segmented copolymer wherein one or more linear molecular chains composed of segments (A) are bonded to terminals or other structural units of a branched molecular chain composed of a segment (B).
(b) A branched multi-segmented copolymer wherein one or more linear molecular chains composed of segments (B) are bonded to terminals or other structural units of a branched molecular chain composed of a segment (A).
(c) A branched multi-segmented copolymer wherein a branched molecular chain composed of a segment (B) and a branched molecular chain composed of a segment (A) are bonded.
(d) A graft copolymer wherein one or more side chains composed of segments (A) are bonded to a main chain composed of a segment (B).
(e) A graft copolymer wherein one or more side chains composed of segments (B) are bonded to a main chain composed of a segment (A).

As the fluoropolymer (H), the branched multi-segmented copolymer of the above (a) having a plurality of segments (A) at the polymer terminals, is preferred, since the interaction between the polymer and water and/or alcohol solvent is large, to facilitate dispersion in the solvent.

In the electrolyte material, the segment (A) and the segment (B) are phase-separated, and such phase-separation can be confirmed by carrying out dynamic viscoelasticity measurement with respect to a membrane of the fluoropolymer (H) to ascertain that in the obtained graph of tanδ (loss tangent), a peak of tanδ corresponding to the segment (A) and a peak of tanδ corresponding to the segment (B) are observed. Otherwise, it can be confirmed by observing the membrane of the fluoropolymer (H) by means of a transmission electron microscope, to ascertain that it is separated into two phases.

As the fluoropolymer (H) being a branched multi-segmented copolymer of (a), in order to obtain the above-mentioned branched multi-segmented copolymer wherein a plurality of linear molecular chains composed of segments (A) are bonded to terminals of a branched molecular chain composed of a segment (B), preferred is one obtained by polymerizing a monomer component (α) containing a monomer (m1) in the presence of a polymer (B') formed by polymerizing a monomer component (β) containing a monomer component of either one or both of a monomer (m2) having an alicyclic structure (hereinafter simply referred to also as a monomer (m2)) and a monomer (m2') capable of forming an alicyclic structure by cyclopolymerization (hereinafter simply referred to also as a monomer (m2')), and a monomer (m3) having an iodine atom, and then converting the precursor group for an ionic group to the ionic group.

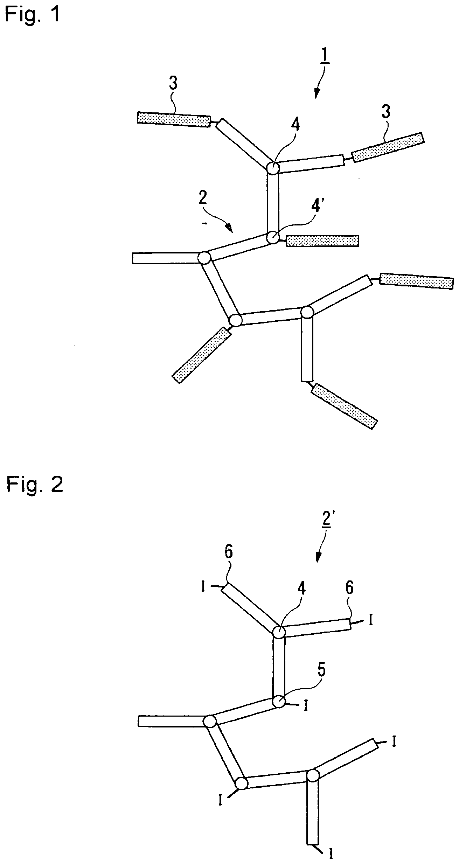

Fig. 1 is a schematic diagram showing an example of the fluoropolymer (H) which is a branched multi-segmented copolymer of (a).

In the fluoropolymer (H) 1 in Fig. 1, six linear molecular chains made of segments (A) 3 as shaded portions in the Fig. are bonded to terminals or other structural units in a branched molecular chain made of a segment (B) as a white portion in the Fig.

White circular portions in the Fig. are branch points 4 and 4'. Branch points 4 and 4' are each composed of a structural unit having an iodine atom removed from the structural unit (u3) derived from the monomer (m3) (hereinafter simply referred to also as the structural unit (u3)).

### Segment (A):

Segment (A) is composed of a molecular chain having the structural unit (u1).

The segment (A) may have, as the case requires, the structural unit (u2), the structural unit (u3), a structural unit (branch point) having the iodine atom removed from the structural unit (u3) and a structural unit (u4) (hereinafter simply referred to also as a structural unit (u4)) derived from another monomer (m4) (hereinafter simply referred to also as a monomer (m4)).

The segment (A) is preferably a linear molecular chain from the viewpoint of the synthesis. If a monomer (m1) is polymerized by adding a monomer (m3) having an iodine atom to be a source of a branch, in the presence of the above-mentioned polymer (B'), a polymerization reaction is likely to start also from a radical formed as the iodine atom of the monomer (m3) is withdrawn by a radical in the polymerization reaction system, whereby a copolymer of the monomer (m1) and the monomer (m3) not bonded to the segment (B) is likely to be formed as a by-product, such being undesirable.

The segment (A) is, in view of durability, preferably a segment in which all of hydrogen atoms bonded to carbon atoms in the structural units are replaced by fluorine atoms, and when molecular chain terminals are present, a segment in which all of hydrogen atoms bonded to carbon atoms at the molecular chain terminal portions are also replaced by fluorine atoms, is more preferred.

The ion exchange capacity of the segment (A) is preferably at least 1 meq/g dry resin, more preferably at least 1.3 meq/g dry resin, further preferably at least 1.5 meq/g dry resin. When the ion exchange capacity is at least 1 meq/g dry resin, even if the segment (B) has no structural units (u1), the electrical conductivity of the fluoropolymer (H) becomes high, whereby a polymer electrolyte fuel cell using the membrane electrode assembly of the present invention will exhibit excellent power generation characteristics.

The ion exchange capacity of the segment (A) is preferably at most 3.5 meq/g dry resin, more preferably at most 3 meq/g dry resin, further preferably at most 2.5 meq/g dry resin. When the ion exchange capacity is at most 3.5 meq/g dry resin, the fluoropolymer (H) will not swell excessively with water.

The ion exchange capacity of the segment (A) can be calculated by conducting ¹⁹F-NMR measurement of the polymer (F) as described below, and obtaining the structural unit ratio in the segment (A).

The softening temperature of the segment (A) is preferably at least 100°C and at most 180°C, more preferably from 120 to 150°C. When the softening temperature of the segment (A) is at most 180°C, the effect of annealing treatment as described later can be easily obtained. When the softening temperature of the segment (A) is at least 100°C, the heat resistance of the fluoropolymer (H) will be good.

The softening temperature of the segment (A) is obtained in the following manner.

With respect to a membrane of a fluoropolymer (H), by means of a dynamic viscoelasticity measuring device, the measurement is conducted in a tensile mode under conditions of a sample width of 5.0 mm, a length between grips being 15 mm, a measurement frequency of 1Hz and a temperature raising rate of 2°C/min, whereupon from the graph of tanδ (loss tangent), the temperature of the peak of tanδ corresponding to the segment (A) is obtained.

The mass average molecular weight of the segment (A) is preferably from 20,000 to 5,000,000, more preferably from 50,000 to 1,000,000. When the mass average molecular weight of the segment (A) is at least 20,000, at the time when the ion exchange capacity of the fluoropolymer (H) is adjusted to be within the preferred range, the fluoropolymer (H) will not swell excessively with water. When the mass average molecular weight of the segment (A) is at most 5,000,000, at the time when the ion exchange capacity of the fluoropolymer (H) is adjusted to be within the preferred range, dispersibility of the fluoropolymer (H) in water and/or alcohol solvent will be good.

The mass average molecular weight of the segment (A) is obtained in the following manner.

In the case of obtaining the fluoropolymer (H) by polymerizing a monomer component (α) to constitute the segment (A) in the presence of the polymer (B') after producing the polymer (B') to be the origin of the segment (B), the difference between the mass average molecular weight of the polymer (F) as described later and the mass average molecular weight of the polymer (B') will be taken as the mass average molecular weight of the segment (A).

Whereas, in the case of obtaining the fluoropolymer (H) by polymerizing a monomer component (β) to constitute the segment (B) in the presence of a polymer (A') after producing the polymer (A') to be the origin of the segment (A), the mass average molecular weight of the polymer (A') is measured.

### Segment (B):

Segment (B) is composed of a molecular chain having the structural unit (u2).

The segment (B) may have, as the case requires, the structural unit (u1), the structural unit (u3), a structural unit (branch point) having the iodine atom removed from the structural unit (u3), the structural unit (u4), etc.

The segment (B) preferably does not have the structural unit (u1), and more preferably does not have the structural unit (u1) and the structural unit (u4). By not having structural units other than the structural units (u2) as far as possible, the segment (B) will have a larger proportion of the structural units (u2), whereby the oxygen permeability of the phase composed of the segment (B) will be further increased.

The segment (B) is, in view of durability, preferably a segment in which all of hydrogen atoms bonded to carbon atoms are replaced by fluorine atoms.

Further, in the case of using the monomer (m3) in the production of the segment (B), an iodine atom derived from the monomer (m3) may sometimes remain, and therefore, some iodine atoms may be bonded to carbon atoms in the segment (B).

As the segment (B), a branched molecular chain capable of introducing a plurality of segments (A) is preferred, since the interaction between the fluoropolymer (H) and water and/or alcohol solvent will be increased thereby to facilitate dispersion in the solvent.

The segment (B) is preferably one formed by polymerizing a monomer component (β) containing either one or both of the monomer (m2) and the monomer (m2'), and the monomer (m3), since the segment (polymer) formed after the polymerization would be a branched molecular chain.

Fig. 2 is a schematic diagram showing an example of the polymer (B') being the origin of the segment (B), to be obtained by polymerizing the monomer component (β).

Among white circular portions in the polymer (B') 2' in Fig. 2, a portion where an iodine atom is bonded is composed of the structural unit (u3) 5. The structural unit (u3) 5 becomes, at the time of forming the segment (A), a starting point of polymerization of the monomer component (α) as the iodine atom is withdrawn by a radical in the polymerization reaction system, and after the segment (A) is formed, it becomes a branch point 4' in the fluoropolymer (H) 1 in Fig. 1.

Among white circular portions in the polymer (B') 2' in Fig. 2, a portion where an iodine atom is not bonded, is a branch point 4 in the polymer (B') 2' (the segment (B) 2 in Fig. 1). The branch point 4 is composed of a structural unit having the iodine atom removed from the structural unit (u3). The structural unit (u3) having its iodine atom withdrawn by a radical in the polymerization reaction system during the formation of the polymer (B') 2', becomes the starting point of polymerization of the monomer component (β), and after the polymerization of the monomer component (β), it becomes a branch point 4 in the polymer (B') 2' (segment (B) 2 in Fig. 1).

In the polymer (B') 2' in Fig. 2, the terminal portion 6 where an iodine atom is bonded is a portion where the iodine atom is bonded to the structural unit (u2). The iodine atom is an iodine atom released from the structural unit (u3) in the course of formation of the polymer (B') 2', or an iodine atom transferred from the monomer (m3) having the iodine atom in the polymerization reaction system. The terminal portion 6 becomes the starting point of polymerization of the monomer component (α) after detachment of the iodine atom, at the time of forming the segments (A).

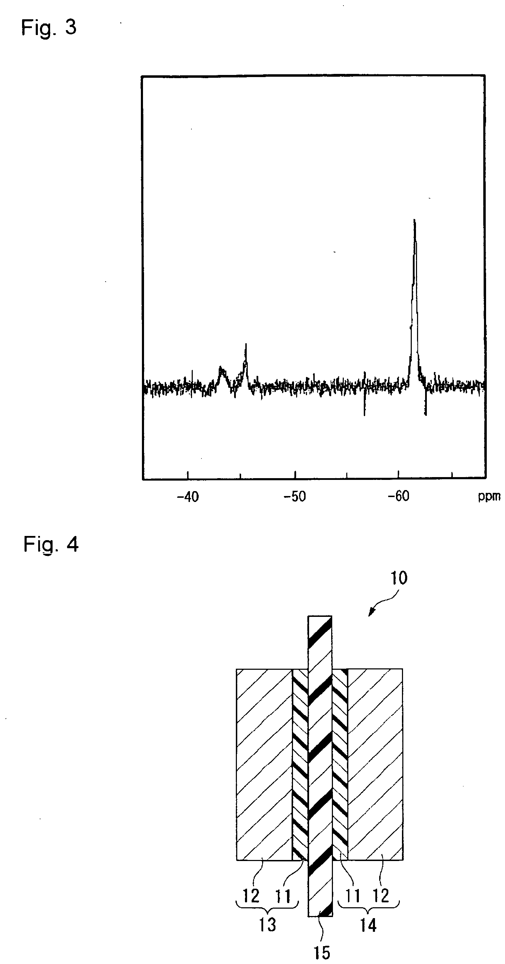

The segment (B) being a branched molecular chain can be confirmed by measuring ¹⁹F-NMR. For example, in Ex. 1, it can be confirmed from the fact that when ¹⁹F-NMR of the polymer segment (B) being the origin of the segment (B') is measured, as shown in Fig. 3, not only a peak (in the vicinity of from -60 to -65 ppm) attributable to a fluorine atom bonded to a carbon atom to which an iodine atom is bonded in the structural unit (u3), but also a peak (about -45 ppm) attributable to a fluorine atom bonded to a carbon atom of an alicyclic structure to which an iodine atom is bonded in the structural unit (u2) is present. In Fig. 3, the value of the chemical shift on the horizontal axis is a value when the chemical shift of perfluorobenzene as the solvent is set to be -162.7 ppm.

In a case where it is desired to increase the mass average molecular weight of the segment (polymer) obtainable by polymerizing the monomer component (β), by polymerizing, after removing the monomer (m3), a monomer component containing either one or both of the monomer (m2) and the monomer (m2') in the presence of said segment (polymer), it is possible to increase the mass average molecular weight. For example, in the case of the later-described solution polymerization, a monomer component (β) may be polymerized, followed by flocculation, washing and drying, whereupon the obtained segment (polymer) may be re-dissolved in a polymerization solvent, and either one or both of the monomer (m2) and the monomer (m2') are added, followed by polymerization, whereby it is possible to increase the mass average molecular weight.

The ion exchange capacity of the segment (B) is smaller than the ion exchange capacity of the segment (A). The ion exchange capacity is preferably from 0 to 0.5 meq/g dry resin, more preferably from 0 to 0.2 meq/g dry resin, more preferably from 0 to 0.05 meq/g dry resin. When the ion exchange capacity is at most 0.5 meq/g dry resin, the proportion of structural units (u2) in the segment (B) becomes large, and the oxygen permeability of the phase composed of the segment (B) will further increase.

The ion exchange capacity of the segment (B) can be calculated by obtaining the structural unit ratio in the segment (B) by conducting the ¹⁹F-NMR measurement of the polymer (F) as described later.

The softening temperature of the segment (B) is preferably higher than the softening temperature of the segment (A). When the softening temperature of the segment (B) is higher than the softening temperature of the segment (A), even by the annealing treatment as described later, the phase composed of the segment (B) is less likely to be densified, and the oxygen permeability of the phase composed of the segment (B) is less likely to decrease.

The softening temperature of the segment (B) is preferably at least 150°C, more preferably at least 200°C. Usually, the softening temperature is at most 330°C.

When the softening temperature of the segment (B) is at least the softening temperature of segment (A) +30°C, preferably +50°C, even by the annealing treatment as described later, the phase composed of the segment (B) is less likely to be densified, and the oxygen permeability of the phase composed of the segment (B) is less likely to decrease. The softening temperature may sometimes not be observed, if the thermal decomposition temperature is lower. On the other hand, when the softening temperature of the segment (B) is at most 200°C, the catalyst layer is less likely to become brittle by conducting the annealing treatment as described later at a temperature of at least the softening temperature and at most 200°C. Annealing at a temperature exceeding 200°C is likely to bring about deterioration of the catalyst layer.

The softening temperature of the segment (B) is obtained in the following manner.

With respect to a membrane of the fluoropolymer (H), by means of a dynamic viscoelasticity measuring device, the measurement is conducted in a tensile mode under conditions of a sample width of 5.0 mm, a length between grips being 15 mm, a measurement frequency of 1Hz and a temperature-raising rate of 2°C /min, and from the graph of tanδ (loss tangent), the temperature at the peak of tanδ corresponding to the segment (B) is obtained.

The mass average molecular weight of the segment (B) is preferably from 5,000 to 500,000, more preferably from 5,000 to 100,000. When the mass average molecular weight is at least 5,000, at the time when the ion exchange capacity of the fluoropolymer (H) is adjusted to be within the preferred range, the fluoropolymer (H) will not swell excessively with water. When the mass average molecular weight is at most 500,000, at the time when the ion exchange capacity of the fluoropolymer (H) is adjusted to be within the preferred range, the dispersibility of the fluoropolymer (H) in water and/or alcohol solvent will be good.

The mass average molecular weight of the segment (B) is obtained in the following manner.

In the case of obtaining the fluoropolymer (H) by polymerizing, after producing the polymer (B') as the origin of the segment (B), a monomer component (α) to constitute the segment (A), in the presence of the polymer (B'), the mass average molecular weight of the polymer (B') is measured.

In the case of obtaining the fluoropolymer (H) by polymerizing, after producing the polymer (A') as the origin of the segment (A), a monomer component (β) to constitute the segment (B), in the presence of the polymer (A'), the difference between the mass average molecular weight of the polymer (F) as described later and the mass average molecular weight of the polymer (A') will be taken as the mass average molecular weight of the segment (B).

The mass ratio ((A)/(B)) of the segment (A) to the segment (B) is preferably from 1/9 to 9/1, more preferably from 1/4 to 4/1. When the segment (B) is at least 10 mass%, the effect to improve the oxygen permeability becomes distinct. When the segment (B) is at most 90 mass%, the proton conductivity required for power generation of a fuel cell will be secured.

The mass ratio of the segment (A) to the segment (B) can be calculated by obtaining the ratio of the structural units that constitute the respective segments, by the measurement of ¹⁹F-NMR of the polymer (F) as described later. In a case where the analysis is difficult by only the ¹⁹F-NMR of the polymer (F) such as a case where the segment (A) and the segment (B) have a common structural unit, at the time of analyzing the ¹⁹F-NMR of the polymer (F), calculation is carried out by using also the information on the compositions of the segment (A) or segment (B) previously measured.

### Structural unit (u1):

The structural unit (u1) is a unit having an ionic group.

The ionic group may, for example, be a sulfonic acid group, a sulfonimide group, a sulfonmethide group, a phosphonic acid group as a strong acid group, or salts thereof. A sulfonic acid group or its salt is preferred, since it is thereby possible to reduce the number of steps for the synthesis of a monomer or polymer having such a functional group or its precursor group, as compared with the case of introducing other functional groups.

As the structural unit (u1), from the viewpoint of durability, a structural unit in which all of hydrogen atoms bonded to carbon atoms are replaced by fluorine atoms, is preferred.

The structural unit (u1) may, for example, be a structural unit (u1-1) having one ionic group, a structural unit (u1-2) having two ionic groups, etc. Among them, the structural unit (u1-2) is preferred, since it is thereby possible to increase the proton conductivity by increasing the ion exchange capacity of the entire fluoropolymer (H) and to express even higher power generation performance, when a segment (B) having no ionic group or having a small ion-exchange capacity, is added.

### Structural unit (u1-1):

As the structural unit (u1-1), a structural unit (u11) is preferred, since it is thereby easy to produce the fluoropolymer (H), and industrial implementation is easy.

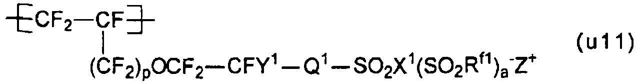

Z⁺ is H⁺, a monovalent metal cation, or an ammonium ion wherein one or more hydrogen atoms may be substituted by hydrocarbon groups, and from the viewpoint of high proton conductivity, H⁺ is preferred. From the viewpoint of high durability, some of H⁺ may be substituted by Mn ions, Ce ions, Ru ions, Pd ions, Ag ions, etc. having an equivalent amount of charge.

Q¹ is a single bond, or a perfluoroalkylene group which may have an etheric oxygen atom.

When the perfluoroalkylene group for Q¹ has an etheric oxygen atom, such oxygen atom may be only one or may be two or more. Further, such oxygen atom may be inserted between carbon and carbon atoms in the perfluoroalkylene group, or may be present at a terminal of the CFY¹ side.

The perfluoroalkylene group may be linear or may be branched, and is preferably linear.

The number of carbon atoms in the perfluoroalkylene group is preferably from 1 to 6, more preferably from 1 to 4. When the number of carbon atoms is at most 6, it is possible to prevent a decrease in the ion exchange capacity of the fluoropolymer (H), and to prevent a decrease in the proton conductivity.

Y¹ is a fluorine atom or a monovalent perfluorinated organic group.

As Y¹, a fluorine atom or a trifluoromethyl group is preferred.

R^{f1} is a perfluoroalkyl group which may have an etheric oxygen atom.

The perfluoroalkyl group may be linear or may be branched, and is preferably linear.

The number of carbon atoms in the perfluoroalkyl group is preferably from 1 to 6, more preferably from 1 to 4. As the perfluoroalkyl group, a perfluoromethyl group, a perfluoroethyl group or the like, is preferred.

X¹ is an oxygen atom, a nitrogen atom or a carbon atom, and when X¹ is an oxygen atom, a=0, when X¹ is a nitrogen atom, a=1, and when X¹ is a carbon atom, a=2.

-SO₂X¹(SO₂R^{f1})ₐ⁻Z⁺ may, for example, be a sulfonic acid group or its salt (a-SO₃⁻Z⁺ group), a sulfonimide group or its salt (a -SO₂ N(SO₂R^{f1})⁻Z⁺ group), or a sulfonmethide group or its salt (a -SO₂C(SO₂R^{f1})₂⁻Z⁺ group).

p is 0 or 1.

As the structural unit (u11), structural units (u11-1) to (u11-4) are preferred, since the production of the fluoropolymer (H) is thereby easy, and industrial implementation is easy.

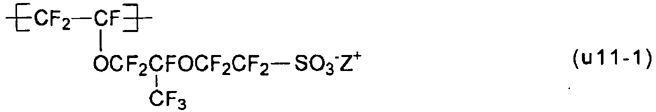

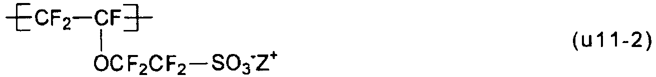

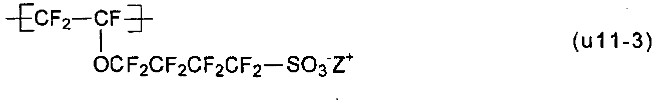

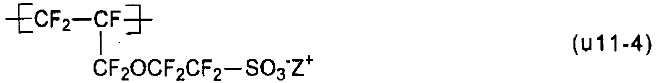

### Structural unit (u1-2):

The structural unit (u1-2) is preferably a structural unit having a group (g1) having a plurality of ionizable groups, since it is thereby possible to increase the ion exchange capacity of the entire fluoropolymer (H) thereby to increase the proton conductivity, and to express even higher power generation performance, when the segment (B) having no ionic group or having a small ion-exchange capacity is added.

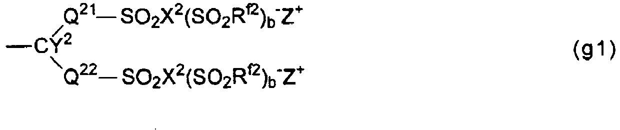

Z⁺ is H⁺, a monovalent metal cation, or an ammonium ion wherein one or more hydrogen atoms may be substituted by hydrocarbon groups, and from the viewpoint of imparting proton conductivity, H⁺ is preferred. From the viewpoint of high durability, some of H⁺ may be substituted by Mn ions, Ce ions, Ru ions, Pd ions, Ag ions, etc. having an equivalent amount of charge.

Q²¹ is a perfluoroalkylene group which may have an etheric oxygen atom.

Q²² is a single bond, or a perfluoroalkylene group which may have an etheric oxygen atom.

When the perfluoroalkylene group for Q²¹ or Q²² has an etheric oxygen atom, such oxygen atom may be only one or may be two or more. Further, such oxygen atom may be inserted between carbon and carbon atoms in the perfluoroalkylene group, or may be present at a terminal on the CY² side.

The perfluoroalkylene group may be linear or may be branched, and is preferably linear.

The number of carbon atoms in the perfluoroalkylene group is preferably from 1 to 6, more preferably from 1 to 4. When the number of carbon atoms is at most 6, the boiling point of the fluoromonomer as the raw material will be low, whereby purification by distillation becomes easy. Further, when the number of carbon atoms is at most 6, it is possible to prevent a decrease in the ion exchange capacity of the fluoropolymer (H), and to prevent a decrease in the proton conductivity.

At least one of Q²¹ and Q²² is preferably a C₁₋₆ perfluoroalkylene group having an etheric oxygen atom at a terminal on the CY² side. A fluoromonomer having such a C₁₋₆ perfluoroalkylene group having an etheric oxygen atom, can be prepared without via a direct fluorination reaction with fluorine gas, whereby the yield is good, and the production is easy. In the direct fluorination reaction with fluorine gas, cleavage of a carbon-sulfur bond occurs as a side reaction, and since the group (g1) has two ionic groups containing a sulfur atom, the decrease in the yield becomes distinct.

Y² is a fluorine atom or a monovalent perfluorinated organic group.

Y² is preferably a fluorine atom or a C₁₋₆ linear perfluoroalkyl group which may have an etheric oxygen atom.

R^{f2} is a linear or branched perfluoroalkyl group which may have an etheric oxygen atom. The number of carbon atoms in the perfluoroalkyl group is preferably from 1 to 8, more preferably from 1 to 6. In a case where the group (g1) has two or more R^{f2}, the plurality of R^{f2} may be the same groups, or may be different groups, respectively.

X² is an oxygen atom, a nitrogen atom or a carbon atom, and when X² is an oxygen atom, b=0, when X² is a nitrogen atom, b=1, and when X² is a carbon atom, b=2.

The -SO₂X²(SO₂R^{f2})_{b}⁻Z⁺ group may, for example, be a sulfonic acid group or its salt (a -SO₃⁻Z⁺ group), a sulfonimide group or its salt (a -SO₂N(SO₂R^{f2})⁻Z⁺ group), or a sulfonmethide group or its salt (a -SO₂C(SO₂R^{f2})₂)⁻Z⁺ group).

As the structural unit (u1-2), a structural unit (u12) is preferred, since it is thereby possible to increase the ion exchange capacity of the entire fluoropolymer (H) thereby to increase the proton conductivity, and to express even higher power generation performance, when the segment (B) having no ionic group or having a small ion-exchange capacity is added.

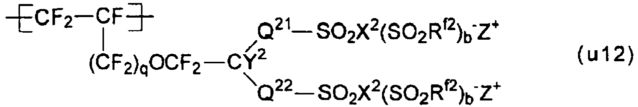

q is 0 or 1.

As the structural unit (u12), from such a viewpoint that the production of the fluoropolymer (H) is easy, and industrial implementation is easy, structural units (u12-1) to (u12-3) are preferred, and a structural unit (u12-1) is particularly preferred.

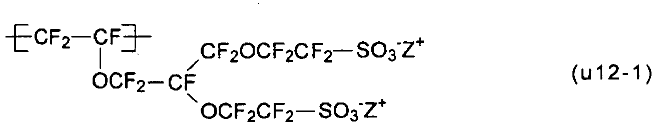

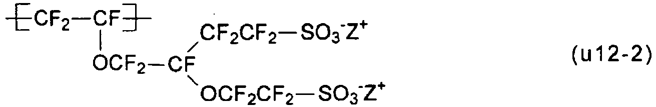

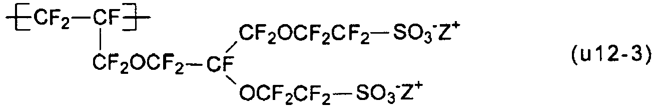

The proportion of the structural unit (u1) is suitably adjusted according to the desired ion exchange capacity of the fluoropolymer (H). For example, it is preferably from 7 to 70 mol%, more preferably from 10 to 50 mol%, in all structural units (100 mol%) constituting the fluoropolymer (H).

The proportion of the structural units (u1) in the fluoropolymer (H) may be obtained from the results of measurement of ¹⁹F-NMR with respect to the polymer (F) as described later.

### Structural unit (u2):

The structural unit (u2) is a structural unit having an alicyclic structure (but excluding one having an ionic group).

The alicyclic structure is a cyclic organic group which may have one or two etheric oxygen atoms, and wherein hydrogen atoms bonded to carbon atoms may be replaced by fluorine atoms.

As the structural unit (u2), from the viewpoint of durability, a structural unit in which all of hydrogen atoms bonded to carbon atoms are replaced by fluorine atoms, is preferred.

The structural unit (u2) may, for example, be a structural unit (u2-1) derived from a monomer (m2) which will be described later, a structural unit (u2-2) derived from a monomer (m2') which will be described later, etc.

### Structural unit (u2-1):

As the structural unit (u2-1), the structural units (u21) and (u22) may, for example, be mentioned, and the structural unit (u21) is preferred, since the effect to increase the oxygen permeability of the fluoropolymer (H) and to further improve the electrode performance, is high.

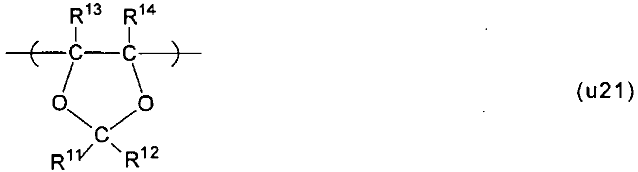

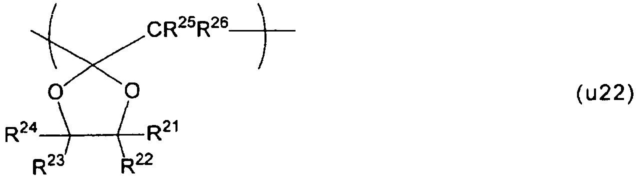

R¹¹ and R¹² are each independently a fluorine atom or a perfluoroalkyl group having from 1 to 5 carbon atoms.

R¹³ and R¹⁴ are each independently a fluorine atom, a perfluoroalkyl group having from 1 to 5 carbon atoms, or a perfluoroalkoxy group having from 1 to 5 carbon atoms. Of R¹³ and R¹⁴, from the viewpoint of high polymerizability, preferably at least one is a fluorine atom, and more preferably both of them are fluorine atoms.

The perfluoroalkyl group and perfluoroalkoxy group may be linear or may be branched, and is preferably linear.

R²¹ to R²⁶ are each independently a monovalent perfluorinated organic group which may have an etheric oxygen atom, or a fluorine atom. The monovalent perfluorinated organic group is preferably a perfluoroalkyl group. In a case where the perfluoroalkyl group has an etheric oxygen atom, such oxygen atom may be only one or may be two or more. Further, such oxygen atom may be inserted between carbon and carbon atoms of the perfluoroalkyl group, or may be present at a terminal on the side bonded to a carbon atom. The perfluoroalkyl group may be linear or may be branched, and is preferably linear.

Of R²⁵ and R²⁶, from the viewpoint of high polymerizability, preferably at least one is a fluorine atom, and more preferably both are fluorine atoms.

As the structural unit (u21), the structural unit (u21-1) is particularly preferred from such a viewpoint that the effect to further improve the electrode performance of the fluoropolymer (H) is high.

As the structural unit (u22), the structural units (u22-1) is particularly preferred from the viewpoint of efficiency in the synthesis of the monomer.

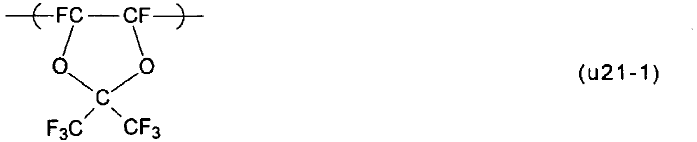

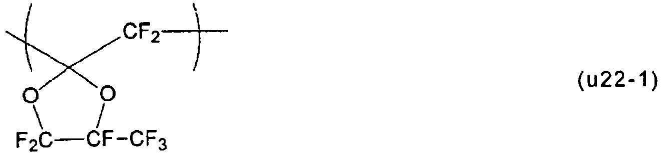

### Structural unit (u2-2):

The structural unit (u2-2) may, for example, be a structural unit (u24).

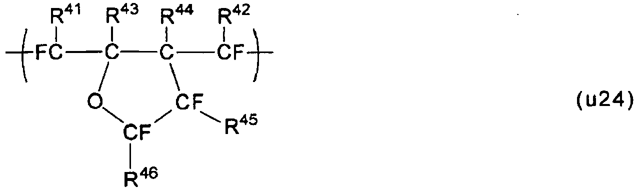

R⁴¹ to R⁴⁶ each independently is a monovalent perfluorinated organic group which may have an etheric oxygen atom, or a fluorine atom. As the monovalent perfluorinated organic group, a perfluoroalkyl group is preferred. In a case where the perfluoroalkyl group has an etheric oxygen atom, such oxygen atom may be only one, or may be two or more. Further, such oxygen atom may be inserted between carbon and carbon atoms of the perfluoroalkyl group, or may be present at a terminal on the side bonded to a carbon atom. The perfluoroalkyl group may be linear or may be branched, and is preferably linear.

R⁴¹ to R⁴⁴ are, from the viewpoint of high polymerization reactivity, more preferably fluorine atoms.

As the structural unit (u24), the structural units (u24-1) is particularly preferred from the viewpoint of efficiency in the synthesis of the monomer.

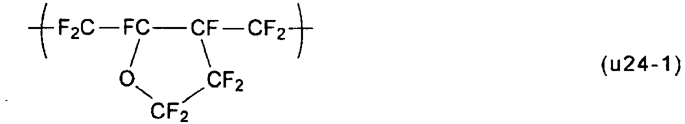

The proportion of the structural unit (u2) is preferably from 70 to 99.5 mol%, more preferably from 80 to 98 mol%, in all structural units (100 mol%) constituting the segment (B). When the proportion of the structural unit (u2) is at least 70 mol%, the oxygen permeability of the electrolyte material will be higher.

The proportion of the structural units (u2) in the segment (B), in a case where the polymer (B') is a binary copolymer obtained by polymerization of one type of the monomer (m3) having an iodine atom, and one type of the monomer (m2) having an alicyclic structure or the monomer (m2') capable of forming an alicyclic structure by cyclopolymerization, can be calculated from the content of iodine atoms by the elemental analysis with respect to the polymer (B'). In a case where it is a copolymer made of three or more types of monomers, the proportion can be calculated by further using the ratio of the structural units, obtainable from the measurement of ¹⁹F-NMR.

The proportion of the structural unit (u2), is preferably from 10 to 80 mol%, more preferably from 20 to 60 mol%, in all units (100 mol%) constituting the fluoropolymer (H).

The proportion of the structural unit (u2) in the fluoropolymer (H) may be obtained from the measurement results of ¹⁹F-NMR of the polymer (F) as described later. In the case of synthesizing the polymer (F), after synthesizing the polymer (A') first, the composition information of the polymer (A') may be employed for the calculation as the case requires, and in the case of synthesizing the polymer (F) after synthesizing the polymer (B') first, the composition information of the polymer (B') may be employed for the calculation as the case requires.

### Structural unit (u3):

The structural unit (u3) is a structural unit derived from a monomer (m3) which will be described later.

The structural unit (u3) having the iodine atom detached, becomes a branch point in the segment (B) or in the fluoropolymer (H).

As the structural unit (u3), from the viewpoint of durability, preferred is a structural unit wherein part of hydrogen atoms bonded to carbon atoms is replaced by an iodine atom, and the remaining hydrogen atoms bonded to carbon atoms are all replaced by fluorine atoms.

The proportion of the structural unit (u3) (including the structural unit having the iodine atom detached) is preferably from 0.5 to 20 mol%, more preferably from 2 to 10 mol%, in all structural units (100 mol%) constituting the segment (B).

The proportion of the structural unit (u3) in the segment (B), in a case where the polymer (B') is a binary copolymer obtained by the polymerization of one type of the monomer (m3) having an iodine atom, and one type of the monomer (m2) having an alicyclic structure or the monomer (m2') capable of forming an alicyclic structure by cyclopolymerization, can be calculated from the content of iodine atoms by the elemental analysis with respect of the polymer (B'). In a case where it is a copolymer made of three or more types of monomers, the proportion can be calculated by further using the ratio of the structural units, obtainable from the measurement of ¹⁹F-NMR.

The proportion of the structural unit (u3) (including the structural unit having the iodine atom detached) is preferably from 0.1 to 10 mol%, more preferably from 0.5 to 5 mol%, in all units (100 mol%) constituting the fluorinopolymer (H).

The proportion of the structural unit (u3) in the fluoropolymer (H) can be obtained by using the measurement results of ¹⁹F-NMR with respect of the polymer (F) as described later. In the case of synthesizing the polymer (F) after synthesizing the polymer (A') first, the composition information of the polymer (A') may be employed for the calculation as the case requires, and in the case of synthesizing the polymer (F) after synthesizing the polymer (B') first, the composition information of the polymer (B') may be employed for the calculation as the case requires.

### Structural unit (u4):

The structural unit (u4) is a structural unit derived from a monomer (m4) which will be described later.

As the structural unit (u4), from the viewpoint of durability, a structural unit in which all of hydrogen atoms bonded to carbon atoms are replaced by fluorine atoms, is preferred.

As the structural unit (u4), particularly preferred is a structural units derived from tetrafluoroethylene (hereinafter referred to also as TFE) having a high polymerization reactivity, with a view to increasing the mass average molecular weight of the fluoropolymer (H), thereby to increase durability with time of the polymer properties. Further, the introduction of the TFE unit has an effect to impart toughness to let the polymer become to be hardly mechanically broken.

The proportion of the structural unit (u4) is preferably from 0 to 70 mol%, more preferably from 20 to 65 mol%, in all units (100 mol%) constituting the fluorinopolymer (H).

The proportion of the structural unit (u4) of the fluoropolymer (H) can be obtained from the measurement results of ¹⁹F-NMR with respect to the polymer (F) as described later. In the case of synthesizing the polymer (F) after synthesizing the polymer (A') first, the composition information with respect to the polymer (A') may be employed for the calculation as the case requires, and in the case of synthesizing the polymer (F) after synthesizing the polymer (B') first, the composition information with respect to the polymer (B') may be employed for the calculation as the case requires.

### (Process for producing fluoropolymer (H))

A process for producing the fluoropolymer (H) will be described with reference to an example of the branched multi-segmented copolymer of (a).

The fluoropolymer (H) can, for example, be prepared by a process comprising the following steps (I) to (III).
Step (I): A step for producing the polymer (B') as the origin of the segment (B) by polymerizing a monomer component (β) containing either one or both of the monomer (m2) and the monomer (m2'), and the monomer (m3), and, as the case requires, the monomer (m1), the monomer (m4), etc.
Step (II): A step of polymerizing a monomer component (α) containing the monomer (m1) and as the case requires, the monomer (m2), the monomer (m4), etc. in the presence of the polymer (B'), to produce a precursor polymer (hereinafter simply referred to also as polymer (F)) wherein at least one linear molecular chain composed of a precursor of the segment (A) having the structural unit (u1') derived from the monomer (m1) is bonded to a terminal or to another structural unit of a branched molecular chain composed of the segment (B).
Step (III): A step of converting the precursor group of the structural unit (u1') in the precursor of the segment (A) of the polymer (F) to an ionic group, to produce the fluoropolymer (H) wherein at least one linear molecular chain composed of the segment (A) is bonded to a terminal or to another structural unit of the branched molecular chain composed of the segment (B).

### Monomer (m1):

The monomer (m1) is a monomer having a precursor group for an ionic group.

The monomer (m1) is, in view of durability, preferably a perfluoromonomer.

The monomer (m1) may, for example, be a monomer (m1-1) having one precursor group, a monomer (m1-2) having two precursor groups, etc. Among them, the monomer (m1-2) is preferred, since it is possible to increase the proton conductivity by increasing the ion exchange capacity of the entire fluoropolymer (H) and to express a higher power generation performance, when the segment (B) having no ionic group or having a small ion-exchange capacity is added.

### Monomer (m1-1):

As the monomer (m1-1), a monomer (m11) is preferred, since it is thereby easy to produce the fluoropolymer (H), and industrial implementation is easy.

CF₂=CF(CF₂)ₚOCF₂-CFY¹-Q¹-SO₂F (m11).

Q¹, Y¹ and p are as described in the structural unit (u11).

As the monomer (m11), monomers (m11-1) to (m11-4) are preferred, since it is thereby easy to produce the fluoropolymer (H), and industrial implementation is easy.

CF₂=CFOCF₂CF(CF₃)OCF₂CF₂-SO₂F (m11-1),

CF₂=CFOCF₂CF₂-SO₂F (m11-2),

CF₂=CFOCF₂CF₂CF₂CF₂-SO₂F (m11-3),

CF₂=CFCF₂OCF₂CF₂-SO₂F (m11-4).

### Monomer (m1-2):

The monomer (m1-2) is preferably a unit having a group (g2) containing a plurality of fluorosulfonyl groups, since it is thereby possible to increase the proton conductivity by increasing the ion exchange capacity of the entire fluoropolymer (H) and to express a higher power generation performance, when the segment (B) having no ionic group or having a small ion-exchange capacity is added.

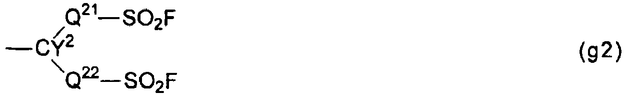

Q²¹, Q²² and Y² are as described in the group (g1).

As the monomer (m1-2), a monomer (m12) having a polymerizable moiety and the group (g2), is preferred. The monomer (m12) is such that the increase in molecular weight is small relative to the group (g2) and it has a structure having a polymerization reactivity, whereby it is preferred to increase the ion exchange capacity of the fluoropolymer (H) thereby to increase the proton conductivity.

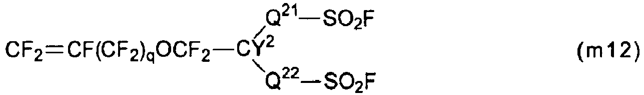

q is as described in the structural unit (u12).

As the monomer (m12), monomers (m12-1) to (m12-3) are preferred, and the monomer (m12-1) is particularly preferred, since it is thereby easy to produce the fluoropolymer (H), and industrial implementation is easy.

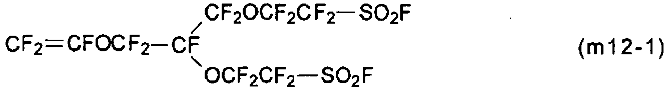

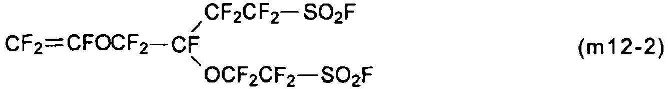

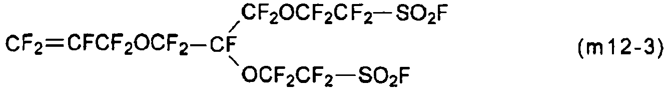

The monomer (m12) can be synthesized by the method described in WO2007/013533, JP-A-2008-202039, etc.

### Monomer (m2):

The monomer (m2) is a monomer having an alicyclic structure (but excluding one having an ionic group or its precursor group).

The alicyclic structure is a cyclic organic group which may have one or two etheric oxygen atoms and wherein hydrogen atoms bonded to carbon atoms may be substituted by fluorine atoms.

The monomer (m2) is preferably a perfluoromonomer from the viewpoint of durability.

A polymerization reactive carbon-carbon double bond in the monomer (m2) may be constituted by adjacent two carbon atoms constituting the alicyclic structure, or may be constituted by one carbon atom constituting the alicyclic structure and adjacent one carbon atom present outside the alicyclic structure.

The monomer (m2) may, for example, be a monomer (m21) or a monomer (m22), and the monomer (m21) is preferred, from the viewpoint of high effect to increase the oxygen permeability, thereby to further improve the electrode performance of the fluoropolymer (H).

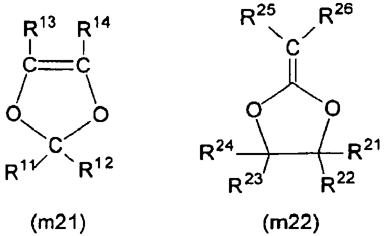

R¹¹ to R¹⁴ are as described in the structural unit (u21).

R²¹ to R²⁶ are as described in the structural unit (u22).

As the monomer (m21), monomer (m21-1) to (m21-7) may, for example, be mentioned. Among them, the monomer (m21-1) is particularly preferred from the viewpoint of high effect to further improve the oxygen permeability of the fluoropolymer (H).

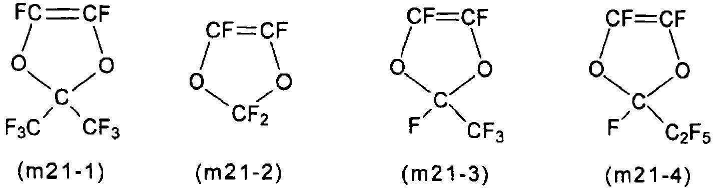

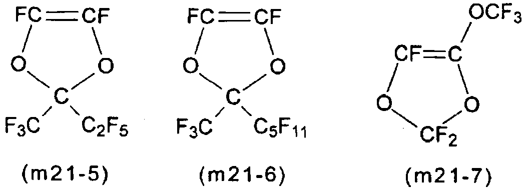

As the monomer (m22), a monomer (m22-1) or a monomer (m22-2) may, for example, be mentioned. Among them, the monomer (m22-1) is particularly preferred from the viewpoint of easy synthesis.

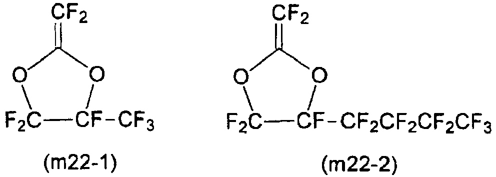

The monomer (m21) can be synthesized by the methods described in the US Patent No. 4,908,461; US Patent No. 5,334,731; Macromolecules, Vol. 26 No. 22, 1993, pp. 5829-5834; JP-A-7-70107, etc.

The monomer (m22) can be synthesized by the methods described in JP-B-43-29154; Izvestiya Akademii Nauk SSSR, Seriya Khimicheskaya, 1989, Volume 4, pp. 938-942, WO2000/056694, etc.

### Monomer (m2'):

The monomer (m2') is a monomer capable of forming an alicyclic structure by cyclopolymerization (but excluding one having an ionic group or its precursor group).

The alicyclic structure is a cyclic organic group which may have one or two etheric oxygen atoms and wherein hydrogen atoms bonded to carbon atoms may be substituted by fluorine atoms.

The monomer (m2') is preferably a perfluoromonomer from the viewpoint of durability.

The monomer (m2') may, for example, be a monomer (m24).

CF(R⁴¹)=C(R⁴³)-O-CF(R⁴⁶)-CF(R⁴⁵)-C(R⁴⁴)=CF(R⁴²) (m24).

R⁴¹ to R⁴⁶ are as described in the structural unit (u24).

As the monomer (m24), monomers (m24-1) to (m24-3) may, for example, be mentioned, and the monomer (m24-1) is particularly preferred from the viewpoint of easiness in the synthesis of the monomer.

CF₂=CF-O-CF₂-CF₂-CF=CF₂ (m24-1),

CF₂=CF-O-CF₂-CF(CF₃)-CF=CF₂ (m24-2),

CF₂=CF-O-CF(CF₃)-CF₂-CF=CF₂ (m24-3).

The monomers (m24-1) to (m24-3) can be synthesized by the methods described in Reports of the Research Laboratory, Asahi Glass Co., Ltd., No. 41, No. 1, pp. 51-58; JP-A-1-143843, JP-A-4-346957, WO2001/092194, etc.

### Monomer (m3):

The monomer (m3) is a monomer having an iodine atom.

The monomer (m3) is preferably a monomer in which part of hydrogen atoms bonded to carbon atoms is replaced by an iodine atom, and the remaining hydrogen atoms are all replaced by fluorine atoms, from the viewpoint of durability.

As the monomer (m3), the following monomers may be mentioned.

CF₂=CFOCF₂CF(CF₃)OCF₂CF₂-I,

CF₂=CFOCF₂CF(CF₃)OCF₂CF(CF₃)OCF₂CF₂-I,

CF₂=CFO(CF₂)₂-I,

CF₂=CFO(CF₂)₃-I,

CF₂=CFO(CF₂)₄-I,

CF₂=CFO(CF₂)₅-I,

CF₂=CFO(CF₂)₆-I,

CF₂=CFO(CF₂)₈-I,

CF₂=CFOCF₂CF(CF₃)-I,

CF₂=CFOCF₂CF(CF₃)OCF₂CF(CF₃)-I,

CF₂=CFO(CF₂)₃OCF₂CF₂-I,

CF₂=CFOCF₂CF₂OCF₂CF₂CF₂CF₂-I,

CF₂=CFOCF(CF₃)CF₂OCF₂CF₂-I,

CF₂=CFOCF₂CF₂CH₂-I,

CF2=CFOCF₂CF(CF₃)OCF₂CF₂CH₂-I,

CF₂=CFOCF₂CF₂CH₂CH₂CH₂-I,

CH₂=CHCF₂CF₂-I,

CH₂=CHCF₂CF₂CF₂CF₂-I,

CH₂=CFCF₂CF₂-I,

CH₂=CFCF₂CF₂CF₂CF₂-I,

CH₂=CFCF₂OCF(CF₃)-I,

CH₂=CFCF₂OCF(CF₃)CF₂OCF(CF₃)-I,

CH₂=CFCF₂OCF(CF₃)CF₂OCF(CF₃)CF₂OCF(CF₃)-I.

Among these, perfluoromonomers containing no hydrogen atom are preferred in view of durability.

### Monomer (m4):

The monomer (m4) is another monomer other than the monomer (m1), the monomer (m2), the monomer (m2') and the monomer (m3) and is a monomer which does not contribute to the formation of the structural unit (u1), the structural unit (u2) and the structural unit (u3).

The monomer (m4) may, for example, be TFE, chlorotrifluoroethylene, trifluoroethylene, vinylidene fluoride, vinyl fluoride, ethylene, propylene, a perfluoro-α-olefin (hexafluoropropylene, etc.), a (perfluoroalkyl) ethylene ((perfluorobutyl) ethylene, etc.), a (perfluoroalkyl) propene (3-perfluorooctyl-1-propene, etc.), etc. As the monomer (m4), in view of durability, a perfluoromonomer is preferred, and TFE is particularly preferred. TFE has a high polymerization reactivity, whereby it is possible to increase the mass average molecular weight of the fluoropolymer (H) thereby to enhance durability by suppressing a change with time in the polymer properties. In addition, the introduction of the TFE unit is effective to impart toughness and to bring about an effect to let the polymer be hardly mechanically breakable.

### Polymerization method:

As the polymerization method, a known radical polymerization method such as a bulk polymerization method, a solution polymerization method, a suspension polymerization method, or an emulsion polymerization method may be mentioned. Further, polymerization may be carried out in liquid or supercritical carbon dioxide.

The polymerization is carried out under such a condition that radicals will form. As the method for forming radicals, a method of irradiating radiation such as UV, γ-rays, electron beams, etc., or a method of adding a radical initiator, may be mentioned. The polymerization temperature is usually, from 10 to 150°C, preferably from 15 to 100°C.

As the radical initiator, a bis(fluoroacyl) peroxide, a bis(chloro-fluoro-acyl) peroxide, a dialkyl peroxydicarbonate, a diacyl peroxide, a peroxy ester, an azo compound or a persulfate may be mentioned. In the bulk polymerization, solution polymerization or suspension polymerization method, it is preferred to use a nonionic radical initiator soluble in a solvent or in the monomer, and in the emulsion polymerization method, it is preferred to use a water-soluble radical initiator such as a persulfate.

The solvent to be used in the solution polymerization method is preferably a solvent having a boiling point of from 20 to 350°C, more preferably a solvent having a boiling point of from 40 to 150°C. As the solvent, a perfluorotrialkyl amine (perfluorotributylamine, etc.), a perfluorocarbon (perfluorohexane, perfluorooctane, etc.), a hydrofluorocarbon (1H,4H-perfluorobutane, 1H-perfluorohexane, etc.), a hydrochlorofluorocarbon (3,3-dichloro-1,1,1,2,2-pentafluoropropane, 1,3-dichloro-1,1,2,2,3-pentafluoropropane, etc.), or a hydro-fluoroether (CF₃CH₂OCF₂CF₂H, etc.) may, for example, be mentioned.

In the solution polymerization method, by adding monomers, a radical initiator, etc. to a solvent, the polymerization of the monomers is carried out by letting radicals be formed in the solvent. The addition of the monomers and the initiator may be all at once, may be sequential or may be continuous.

In the suspension polymerization, by using water as a dispersion medium, and adding monomers and a nonionic radical initiator, etc. in said dispersion medium, the polymerization of the monomers is carried out by letting radicals be formed in the dispersion medium.

The nonionic radical initiator may, for example, be a bis(fluoroacyl) peroxide, a bis(chloro-fluoro-acyl) peroxide, a dialkyl peroxydicarbonate, a diacyl peroxide, a peroxy ester, a dialkyl peroxide, a bis(fluoroalkyl) peroxide, an azo compound, etc.

To the dispersing medium, said solvent as an auxiliary agent; a surfactant as a dispersion stabilizer which prevents coagulation of suspended particles; a hydrocarbon compound (hexane, methanol, etc.) as a molecular weight regulator, etc., may be added;.

### Conversion method:

The following method (i) may be mentioned as a method for converting a -SO₂F group to a sulfonic acid group (a -SO₃⁻H⁺ group), and the following method (ii) may be mentioned as a method for converting a -SO₂F group to a sulfonimide group (a-SO₂N(SO₂R^{f})⁻H⁺ group).
(i) A method of hydrolyzing a -SO₂F group of the polymer (F) to a sulfonate, and converting the sulfonate to an acid form i.e. to a sulfonic acid group.
(ii) A method of imidizing a -SO₂F group of the polymer (F) to a salt form sulfonimide group, and further converting it to an acid form i.e. to an acid form sulfonimide group.

### Method (i):

The hydrolysis may be conducted, for example, by contacting the polymer (F) and a basic compound in a solvent. As the basic compound, sodium hydroxide, potassium hydroxide, or the like may be mentioned. As the solvent, water or a mixed solvent of water and a polar solvent, may be mentioned. The polar solvent may be an alcohol (methanol, ethanol, etc.), dimethyl sulfoxide, etc.

Conversion to an acid form may be conducted, for example, by contacting a polymer having a salt type sulfonic acid group, to an aqueous solution of hydrochloric acid, nitric acid, sulfuric acid, etc.

The hydrolysis and conversion to an acid form are conducted usually at from 0 to 120°C, preferably at from 20 to 100°C.

### Method (ii):

The imidization includes the following methods.
(ii-1) A method of reacting a -SO₂F group and R^{f}SO₂NHM.
(ii-2) A method of reacting a -SO₂F group and R^{f}SO₂NH₂ in the presence of an alkali metal hydroxide, an alkali metal carbonate, MF, ammonia or a primary to tertiary amine.
(ii-3) A method of reacting a -SO₂F group and R^{f}SO₂ NMSi(CH₃)₃.

Here, M is an alkali metal or primary to quaternary ammonium.

Conversion to an acid form is carried out by treating a polymer having a salt form sulfonimide group, with an acid (sulfuric acid, nitric acid, hydrochloric acid, etc.).

### (Mechanism of action)

The electrolyte material of the present invention is made of a fluoropolymer (H) having a segment (A) which is composed of the molecular chain having a structural unit (u1) having an ionic group, and which has a high ion exchange capacity and high hydrophilicity, and a segment (B) which is composed of a molecular chain having a structural unit (u2) having an alicyclic structure, and which has low hydrophilicity as the segment (B) has no ionic group, or has a low ion exchange capacity, and therefore, in the electrolyte material, the segment (A) and the segment (B) undergo phase separation. Further, the fluoropolymer (H) is a branched molecular chain, whereby the segment (A) and the segment (B) tend to be phase-separated in the electrolyte material. Therefore, in the segment (B) having an alicyclic structure and a low density, oxygen is readily permeable.

Particularly when the segment (B) has a branched structure, the phase made of the segment (B) tends to get together. Therefore, the effect by the phase composed of the segment (B) with a low density (i.e. the oxygen permeability is high) can be sufficiently exhibited.

On the other hand, in the case of the conventional random copolymer having a structural unit having an ionic group and a structural unit having an alicyclic structure, the phase wherein the structural unit having an alicyclic structure gets together in the electrolyte material, will not be formed, whereby it is not possible to sufficiently utilize the effect of increasing the oxygen permeability by the alicyclic structure. Further, in the case of a linear block copolymer composed of a segment (A) composed of a perfluoropolymer having an ionic group, and a segment (B) composed of a perfluoropolymer having an alicyclic structure, when the mass average molecular weight of each segment is high, the solubility in a solvent tends to be insufficient, whereby it becomes difficult to prepare a dispersion of the polymer, and an application to a catalyst layer for a fuel cell becomes difficult. When the mass average molecular weight of each segment is low, it becomes possible to disperse the polymer in a solvent, but in the electrolyte material, the segment (A) and the segment (B) will not be sufficiently phase-separated, and the effect to increase the oxygen permeability tends to be low. In the case of a fluoropolymer (H) having many segments (A) at terminals of the branched chain, the interaction between the hydrophilic segment (A) and a dispersion medium containing water and/or an alcohol will be increased, whereby dispersion in the solvent becomes easy even in a case where the mass average molecular weight of the fluoropolymer (H) is high. In particular, in the case of the linear block copolymers in Patent Documents 1 and 2, first, a segment (A) is formed, and then a segment (B) is formed. However, the monomer having a precursor group for an ionic group to be used for forming the segment (A), has low polymerizability, and therefore, the mass average molecular weight of the segment (A) is low. Therefore, it is not possible to increase the mass average molecular weight of the segment (B) in order to sufficiently secure the ion exchange capacity of the linear block copolymer. Therefore, the segment (A) and the segment (B) in the electrolyte material, cannot be sufficiently phase-separated. Whereas, in the case of a fluoropolymer (H) having many segments (A) at terminals of the branched chain, since it has many segments (A), even in a case where a polymerization reactivity of a monomer having a precursor group for an ionic group is low, and the mass average molecular weight of the individual segments (A) is low, the sum of the mass average molecular weights of the segments (A) contained in the fluoropolymer (H) becomes large. Therefore, a segment (B) having a higher mass average molecular weight than in the case of the linear block copolymer, is applied. Therefore, in the fluoropolymer (H), a good phase separation state is obtainable.

### <Liquid composition>

The liquid composition of the present invention is a composition comprising a dispersion medium containing either one or both of water and an alcohol, and the electrolyte material of the present invention dispersed in the dispersion medium.

The alcohol may, for example, be methanol, ethanol, 1-propanol, 2-propanol, 2,2,2-trifluoroethanol, 2,2,3,3,3-pentafluoro-1-propanol, 2,2,3,3-tetrafluoro-1-propanol, 4,4,5,5,5-pentafluoro-1-pentanol, 1,1,1,3,3,3-hexafluoro-2-propanol, 3,3,3-trifluoro-1-propanol, 3,3,4,4,5,5,6,6,6-nonafluoro-1-hexanol, 3,3,4,4,5,5,6,6,7,7,8,8,8-tridecafluoro-1-octanol, etc. As the alcohol, methanol, ethanol, 1-propanol or 2-propanol is particularly preferred.

As the alcohol, one type may be used alone, or two or more types may be used in combination.

The content of water is preferably from 10 to 100 mass%, more preferably from 30 to 70 mass%, in the dispersion medium (100 mass%). By increasing the proportion of water, it is possible to improve the dispersibility of the electrolyte material in the dispersing medium. To obtain a liquid composition with a high concentration of the electrolyte material, it is preferred that firstly a liquid composition of the electrolyte material containing at least 30 mass% of an alcohol in the dispersion medium is prepared, followed by concentration by evaporation of the solvent, and as the case requires, by combining the composition adjustment of the dispersion medium by addition of water and/or an alcohol, to obtain a concentrate having a high proportion of water in the dispersion medium.

The content of an alcohol is preferably from 0 to 90 mass%, more preferably from 30 to 70 mass%, in the dispersion medium (100 mass%). The catalyst layer forming liquid containing a catalyst and an electrolyte material for a fuel cell, should better contain an alcohol, since the surface tension of the liquid is thereby lowered as compared with a case where water is used alone, whereby application to the surface of the substrate and the electrolyte membrane will be facilitated. When the dispersion medium is water alone, the liquid for forming a catalyst layer is repelled at the surface of the substrate or the electrolyte membrane, whereby it becomes difficult to obtain a uniform catalyst layer. Also, drying becomes easy when an alcohol is contained. Therefore, when the dispersion medium of the liquid composition is water only, it is preferred to add an alcohol at the time of preparing the catalyst layer forming solution, but the addition of an alcohol lowers the concentration of the electrolyte material in the catalyst layer forming liquid. Therefore, in order to carry out coating while maintaining the concentration of the electrolyte material in the catalyst layer forming liquid at a high level, it is preferred that an alcohol within the above range is contained in the liquid composition from the beginning.

The proportion of the electrolyte material is preferably from 1 to 50 mass%, more preferably from 3 to 40 mass%, particularly preferably from 5 to 30 mass%, in the liquid composition (100 mass%).

As the method for preparing the liquid composition, for example, methods described in JP-B-4-35226, JP-A-2001-504872, JP-A-2005-82749, WO2006/38928, WO2004/005377, etc. may be mentioned.

As a specific method for preparing the liquid composition, a method of applying shearing such as stirring to the electrolyte material in a dispersion medium under atmospheric pressure or in a sealed state by e.g. an autoclave or the like, may be mentioned. The temperature for the preparation is preferably from 0 to 250°C, more preferably from 20 to 200°C, particularly preferably from 50 to 150°C. As the case requires, shearing by ultrasonic waves, etc. may be applied.

Further, in the case of applying shearing such as stirring to a mixed solution obtained by mixing an electrolyte material and a dispersion medium to prepare the liquid composition, the shearing such as stirring may be applied to a mixed solution obtained by adding all of the dispersing medium to the electrolyte material, or the dispersing medium may be mixed to the electrolyte material dividedly in a plurality of times, and the shearing such as stirring may be applied in between. For example, the shearing such as stirring may be applied to a mixture having a part of the dispersing medium added to the electrolyte material and then the remainder of the dispersion medium is added to the mixture, and the shearing such as stirring is applied again thereto. Otherwise, it is also possible that shearing such as stirring is applied after adding only an alcohol to the electrolyte material, and then, only water is added, followed by applying the shearing such as stirring again.

The liquid composition of the present invention is suitably used for forming a catalyst layer in the membrane electrode assembly as described below.

### <Membrane electrode assembly>

Fig. 4 is a sectional view showing an example of a membrane electrode assembly for a polymer electrolyte fuel cell of the present invention (hereinafter referred to as the membrane electrode assembly). The membrane electrode assembly 10 comprises an anode 13 having a catalyst layer 11 and a gas diffusion layer 12, a cathode 14 having a catalyst layer 11 and a gas diffusion layer 12, and a polymer electrolyte membrane 15 disposed between the anode 13 and the cathode 14, in a state in contact with the catalyst layers 11.

### (Catalyst layer)

The catalyst layer 11 is a layer containing a catalyst and an electrolyte material.

The catalyst may be a supported catalyst having platinum or a platinum alloy supported on a carbon carrier.

The carbon carrier may be carbon black powder.

As the electrolyte material, the electrolyte material of the present invention or a known electrolyte material may be mentioned, and at least the catalyst layer 11 of the cathode 14 contains the electrolyte material of the present invention.

The catalyst layer 11 may contain a water repellent agent with a view to increasing the effect to prevent flooding. The water-repellent agent may, for example, be a tetrafluoroethylene-hexafluoropropylene copolymer, a tetrafluoroethylene-perfluoro-(alkyl vinyl ether) copolymer, polytetrafluoroethylene, etc. The water-repellent agent is preferably a fluoropolymer which can be dispersed in a solvent, since the catalyst layer 11 can thereby be easily processed for water repellency. The amount of the water repellent agent is preferably from 0 to 30 mass%, more preferably from 0 to 20 mass%, in the catalyst layer 11 (100 mass%).

As the method for forming the catalyst layer 11, the following methods may be mentioned.
(i) A method of applying a catalyst layer forming liquid on a polymer electrolyte membrane 15, a gas diffusion layer 12, or a carbon layer 16 to be described later, followed by drying.
(ii) A method of applying a catalyst layer-forming liquid on a substrate film, followed by drying to form a catalyst layer 11, and transferring the catalyst layer 11 on a polymer electrolyte membrane 15.

The catalyst layer forming liquid is a liquid obtained by dispersing an electrolyte material and a catalyst in a dispersion medium. The catalyst layer forming liquid may, for example, be prepared by mixing the liquid composition of the present invention and a dispersion of a catalyst.

In order to stabilize the electrolyte material in the catalyst layer 11, it is preferred to conduct an annealing treatment. The temperature for the annealing treatment is preferably at least the softening temperature of the segment (A) of the fluoropolymer (H) and from 130 to 200°C. When the temperature for the annealing treatment is at least the softening temperature of the segment (A) and at least 130°C, it is possible to control the water content of the electrolyte material to be low, to prevent a decrease in the gas diffusibility in the catalyst layer 11, and to prevent a decrease in the output voltage. When the temperature for the annealing treatment is at most 200°C, it is possible to prevent thermal decomposition of ionic groups, to prevent a decrease in the proton conductivity, and to prevent a decrease in the output voltage. If the temperature for the heat treatment exceeds 190°C, the carbon carrier may be oxidatively decomposed depending on the type of the catalyst. Therefore, it is preferred to carry out the annealing treatment in a nitrogen atmosphere, under reduced pressure, or in an environment where oxygen in the catalyst layer 11 is reduced by a pressure of such as a press.

### (Gas diffusion layer)

The gas diffusion layer 12 has a function to uniformly diffuse gas to the catalyst layer 11 and a function as a current collector.

As the gas diffusion layer 12, carbon paper, carbon cloth, carbon felt, or the like, may be mentioned.

The gas diffusion layer 12 is preferably processed for water repellency by polytetrafluoroethylene, etc.

### (Carbon layer)

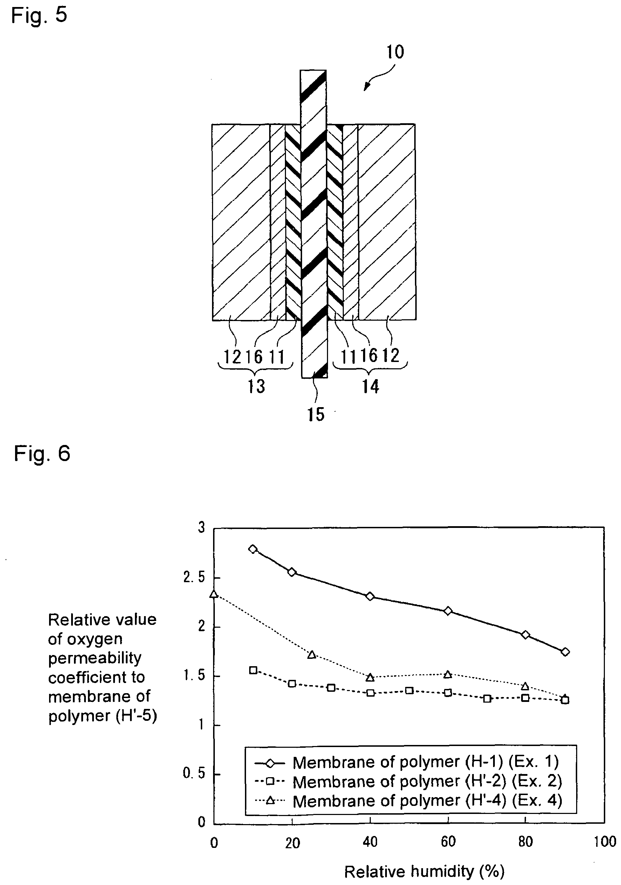

As shown in Fig. 5, the membrane electrode assembly 10 may have a carbon layer 16 between the catalyst layer 11 and the gas diffusion layer 12. By disposing the carbon layer 16, gas diffusibility on the surface of the catalyst layer 11 will be improved, and the power generation performance of the polymer electrolyte fuel cell will be substantially improved.

The carbon layer 16 is a layer containing carbon (carbon powder, carbon nano-fibers, etc.) and a nonionic fluoropolymer.

The nonionic fluoropolymer may, for example, be polytetrafluoroethylene, a tetrafluoroethylene-hexafluoropropene copolymer, a tetrafluoroethylene-perfluoro(alkyl vinyl ether) copolymer, etc.

### (Polymer electrolyte membrane)

The polymer electrolyte membrane 15 is a membrane containing an electrolyte material.

The electrolyte material may be the electrolyte material of the present invention or a known polymer electrolyte material. The known polymer electrolyte material may, for example, be a polymer having a structural unit (u11) and a structural unit derived from TFE; a polymer having a structural unit (u12) and a structural unit derived from TFE; a polymer having a structural unit (u11), a structural unit (u12) and a structural unit derived from TFE; etc.

The polymer electrolyte membrane 15 can be formed by e.g. a method of applying a liquid composition of the electrolyte material on a substrate film or the catalyst layer 11, followed by drying (a casting method).

The liquid composition is a dispersion obtained by dispersing the electrolyte material in a dispersion medium containing an alcohol and/or water.

The polymer electrolyte membrane 15 may be formed by processing a precursor polymer of a polymer electrolyte having fluorosulfonyl groups to a film by extrusion molding, followed by converting the fluorosulfonyl groups to ionic groups.

In order to stabilize the polymer electrolyte membrane 15, it is preferred to conduct an annealing treatment. The temperature for the annealing treatment is preferably from 130 to 200°C, although it may depend on the type of the electrolyte material. When the temperature for the annealing treatment is at least 130°C, the electrolyte material will not be excessively hydrated. When the temperature for the annealing treatment is at most 200°C, it is possible to prevent thermal decomposition of ionic groups, and to prevent a decrease in the proton conductivity of the polymer electrolyte membrane 15.

The polymer electrolyte membrane 15 may be treated with hydrogen peroxide, as the case requires.

The polymer electrolyte membrane 15 may be reinforced with a reinforcing material. The reinforcing material may, for example, be a porous material, fibers, a woven fabric, a nonwoven fabric, etc. The material for the reinforcing material may, for example, be polytetrafluoroethylene, a tetrafluoroethylene-hexafluoropropylene copolymer, a tetrafluoroethylene-perfluoro(alkyl vinyl ether) copolymer, polyethylene, polypropylene, polyphenylene sulfide, etc.

In order to further improve the durability, the polymer electrolyte membrane 15 may contain at least one type of atoms selected from the group consisting of cerium and manganese. Cerium or manganese will decompose hydrogen peroxide which is likely to cause deterioration of the polymer electrolyte membrane 15. Cerium or manganese is preferably present in the form of ions in the polymer electrolyte membrane 15, and if present in the form of ions, it may be present in any state in the polymer electrolyte membrane 15.

The polymer electrolyte membrane 15 may contain, as a water retention agent to prevent drying, silica, heteropoly acids (zirconium phosphate, phosphomolybdic acid, phosphotungstic acid, etc.), etc.

### (Method for producing membrane electrode assembly)

The membrane electrode assembly 10 may be produced, for example, by the following methods.
(i) A method of forming catalyst layers 11 on the polymer electrolyte membrane 15 to obtain a membrane catalyst layer assembly, and sandwiching the membrane catalyst layer assembly between gas diffusion layers 12.
(ii) A method of forming catalyst layers 11 on gas diffusion layers 12 to obtain electrodes (an anode 13, and a cathode 14) and sandwiching a polymer electrolyte membrane 15 between the electrodes.

In a case where the membrane electrode assembly 10 has carbon layers 16, the membrane electrode assembly 10 may be produced, for example, by the following methods.
(i) A method of applying a dispersion liquid containing carbon and a nonionic fluoropolymer on a substrate film, followed by drying to form a carbon layer 16, forming a catalyst layer 11 on the carbon layer 16, bonding the catalyst layer 11 and a polymer electrolyte membrane 15, peeling off the substrate film to obtain a membrane catalyst layer assembly having the carbon layers 16, and sandwiching the membrane catalyst layer assembly between gas diffusion layers 12.
(ii) A method of applying a dispersion liquid containing carbon and a nonionic fluoropolymer on a gas diffusion layer 12, followed by drying to form a carbon layer 16, and sandwiching the membrane catalyst layer assembly having catalyst layers 11 formed on a polymer electrolyte membrane 15, between the gas diffusion layers 12 having the carbon layers 16.
(iii) A method of applying a dispersion liquid containing carbon and a nonionic fluoropolymer on a gas diffusion layer 12, followed by drying to form a carbon layer 16, forming a catalyst layer 11 thereon to obtain electrodes (an anode 13 and a cathode 14), and sandwiching the polymer electrolyte membrane 15 between the electrodes.

### (Advantageous effects)

The above-described membrane electrode assembly 10 is excellent in the power generation characteristics, since the catalyst layer 11 of the cathode 14 contains the electrolyte material of the present invention which has high oxygen permeability as compared with conventional ones. It is particularly excellent in the power generation characteristics under such a condition that the amount of platinum in the electrode catalyst is low. When the platinum amount in the cathode catalyst layer is less than 0.3 mg/cm², preferably when the platinum amount is at most 0.15 mg/cm², particularly preferably when the platinum amount is at most 0.1 mg/cm², if the electrolyte material of the present invention is applied to the cathode catalyst layer, the effect will be remarkable.

### <Polymer electrolyte fuel cell>

The membrane electrode assembly of the present invention will be used for a polymer electrolyte fuel cell. The polymer electrolyte fuel cell may be produced, for example, by sandwiching a membrane electrode assembly between two separators to form a cell, and stacking a plurality of such cells.

The separator may, for example, be a conductive carbon plate having grooves formed to constitute passages for a fuel gas or an oxidizing gas containing oxygen (air, oxygen, etc.).

The type of the polymer electrolyte fuel cell may, for example, be a hydrogen/oxygen type fuel cell, a direct methanol fuel cell (DMFC), etc. Methanol or an aqueous methanol solution to be used as the fuel for DMFC may be a liquid feed or may be a gas feed.

### <Fluorinated branched polymer>

The fluorinated branched polymer made of a polymer (B') as the origin of the segment (B) in the fluoropolymer (H) being the above-mentioned branched multi-segmented copolymer (a), is a polymer composed of a branched molecular chain having a structural unit (u2) having an alicyclic structure. Such a fluorinated branched polymer is not only useful as an intermediate for the electrolyte material of the present invention, but also useful as an intermediate for insulating films for semiconductor devices or electronic circuit boards, optical waveguide materials, anti-reflective materials, water repellents, oil repellents, etc.

### EXAMPLES

The present invention will be described specifically with reference to Examples, but the present invention is by no means limited by these Examples.

Ex. 1, 6 and 8 are Examples of the present invention, and Ex. 2 to 5 and 7 are Comparative Examples.

### (Proportions of structural units)

The proportion of each of the structural units in the polymer (B') as the origin of the segment (B), was calculated from the content of iodine atoms by elemental analysis.

The proportions of structural units in the segment (A) were obtained from the measurement results of ¹⁹F-NMR of the polymer (F).

### (Ion exchange capacity of fluoropolymer (H))

Into a polycarbonate container, 0.7 g of the polymer (F) and 10 mL of a water/methanol mixed solution containing sodium hydroxide at a concentration of 0.35N, were added and left to stand at 60°C for 40 hours to convert -SO₂F groups in the polymer (F) to -SO₃Na groups. The solution was back-titrated with 0.1N hydrochloric acid by using phenolphthalein as an indicator, to obtain the amount of sodium hydroxide in the solution, whereby the ion exchange capacity of the -SO₃H form polymer of the fluoropolymer (H) was calculated. For convenience sake, this ion-exchange capacity may sometimes be adopted as the ion-exchange capacity of the polymer (F).

### (Mass average molecular weight)

By the following method A or method B, the mass average molecular weight of a polymer was obtained.

### Method A:

Using a GPC measurement apparatus (HLC-8320GPC, manufactured by Tosoh Corporation), the mass average molecular weight of a polymer was obtained as a mass-average molecular weight calculated as polymethyl methacrylate. As the solvent, ASAHIKLIN AK-225 SEC grade 1 (manufactured by Asahi Glass Co., Ltd.) was used. As the columns, two columns of PLgel 5 µ MIXED-C (manufactured by Polymer Laboratories, Inc.) were used. The measuring temperature was 40°C. As the detector, an evaporative light scattering detector was used.

### Method B:

The mass average molecular weight of a polymer was obtained by carrying out the measurement in the same manner as in method A except that as the solvent, a solvent having HFC-52-13p (CF₃(CF₂)₅H), HCFC-225cb (CClF₂CF₂CHClF) and 1,1,1,3,3,3-hexafluoroisopropyl alcohol mixed in a volume ratio of 40:55:5, was used, and the measurement temperature was changed to 37°C.

### (Monomer (m1))

PSVE:

   CF₂=CFOCF₂CF(CF₃)OCF₂CF₂-SO₂F (m11-1).
BSVE-2E: 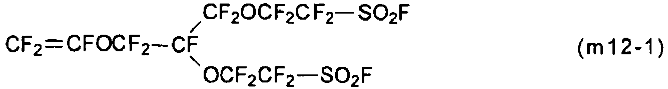
SMD-E4:

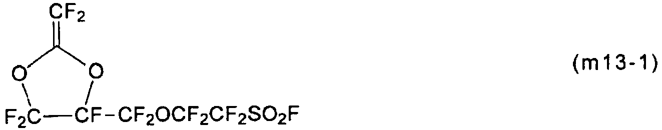

### (Monomer (m2))

PDD:

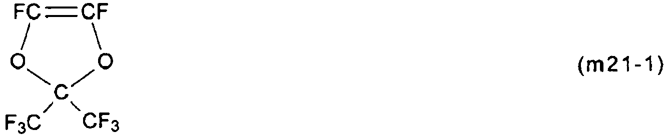

### (Monomer (m2'))

BVE:

CF₂=CF-O-CF₂-CF₂-CF=CF₂ (m24-1)

### (Monomer (m3))

8IVE:

CF₂=CFOCF₂CF(CF₃)OCF₂CF₂-I (m3-1).

### (Monomer (m4))

TFE:

CF₂=CF₂ (m4-1).

### (Radical initiator)

IPP: diisopropyl peroxydicarbonate,
PFB: CF₃CF₂CF₂C(=O)OOC(=O)CF₂CF₂CF₃.

### (Solvent)

HFC-52-13p:CF₃(CF₂)₅H,
HCFC-141b:CH₃CCl₂F,
HCFC-225cb:CClF₂CF₂CHClF,
HCFC-225: a mixture of CClF₂CF₂CHClF and CF₃CF₂CHCl₂.

### (Synthesis of 8IVE)

8IVE was synthesized by the following two step reactions in the same manner as the method disclosed in Huaxue Xuebao, Vol. 47, No. 7, 1989, pp. 720-723.

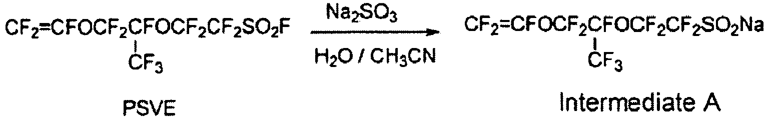

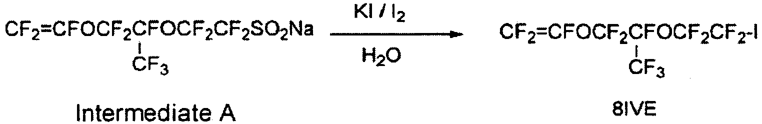

### First step:

Into a 1L four-necked round bottomed flask equipped with a thermometer and a stirrer bar, 105 mL of acetonitrile and150 mL of ion-exchanged water were put. With stirring, 130 g of Na₂SO₃ was added. After mounting a Dimroth condenser and a dropping funnel, 223 g of PSVE was dropwise added over 20 minutes from the dropping funnel. The mixture was heated in an oil bath, refiuxed and stirred for 8 hours at an internal temperature of from 73 to 76°C. Using an evaporator, a liquid mainly composed of acetonitrile was distilled off under reduced pressure to obtain 405 g of a liquid product.

After adding 82.6 g of concentrated hydrochloric acid to the liquid product, extraction was conducted with 300 g of ethyl acetate. To the extracted liquid, 85.6 g of anhydrous sodium sulfate was added. After being left to stand overnight, it was filtered. And after neutralized with NaHCO₃, it was subjected to filtration, whereupon the solvent was distilled off by an evaporator to obtain 283 g of a waxy solid composed mainly of intermediate A.

### Second step:

Into a 1L four-necked round bottomed flask equipped with a thermometer and a stirrer bar, 276 g of the waxy solid composed mainly of intermediate A and 180 g of water were put. While stirring, 142 g of I₂ and 53 g of KI were added. After mounting an Allihn condenser, the mixture was heated until refluxing and stirred for 17 hours at an internal temperature of from 94 to 96°C. After cooling to room temperature, it was filtered, and by using a separatory funnel, the lower layer was collected. The obtained liquid was 226 g. This liquid was transferred to an eggplant flask, and ion-exchange water in the same mass amount was added, and after mounting a Dean-Stark apparatus, it was heated whereupon the lower layer of the distillate was collected to obtain 98.8 g of crude 8IVE.

The purity obtained by the ¹⁹F-NMR analysis (solvent: CDCl₃) using perfluorobenzene as the internal standard, was 96%. The yield from PSVE was calculated to be 39%.

After mixing with a 5 mass% Na₂SO₃ aqueous solution in the same mass amount, the lower layer was collected and dried with molecular sieve MS-4A and subjected to precision distillation to obtain 8IVE with a purity of 99.8% by gas chromatography (bp. 62-63°C /6.7 kPa).

### (Ex. 1) Syntheses of fluorinated branched polymer using PDD and electrolyte material made of branched molecular chain using the branched polymer, and preparation of its liquid composition

Into a Hastelloy autoclave having an internal volume of 230 mL, 5.72 g (11.7 mmol) of 8IVE was charged. A liquid having 0.241 g (1.17 mmol) of IPP dissolved in 5 g of HCFC-225cb, and 25.63 g (105.0 mmol) of PDD were added, and finally HCFC-225cb was added. The total amount of added HCFC-225cb was 118.42 g. Using liquid nitrogen, freeze-deaeration was repeated twice to return the temperature to about 0°C, and then, nitrogen gas was introduced to 0.3MPaG (G represents a gauge pressure, the same applies hereinafter). The autoclave was set in a water bath, and while maintaining the internal temperature at 45°C, the mixture was stirred for 8 hours. After the stirring, the autoclave was immersed into ice water and cooled to at most 20°C to terminate the reaction.

The jelly-like product was transferred to a beaker from the autoclave, and HCFC-225cb was added. The total amount was 214 g. After stirring for 5 minutes by a magnetic stirrer, 261 g of n-hexane was added to coagulate the polymer, followed by stirring continuously for 30 minutes. Vacuum filtration was conducted, and the obtained polymer was washed with n-hexane. The polymer was returned to the beaker, and HCFC-225cb was added to bring the total amount to be 214 g, followed by stirring for 5 minutes. 261 g of n-hexane was added to coagulate the polymer, followed by stirring for 30 minutes. Vacuum filtration was conducted, followed by washing with n-hexane, and again in a similar manner HCFC-225cb was added, followed by stirring, aggregation with n-hexane, filtration and washing with n-hexane. Then, the product was dried in a vacuum oven at 60°C to a constant weight, to obtain 23.75 g of a polymer (B'-1) as a white powder.

With respect to the polymer (B'-1), the content of iodine atoms was examined by elemental analysis and found to be 2.8 mass%. From this value, the molar ratio (8IVE/PDD) of the structural unit derived from 8IVE to the structural unit derived from PDD in the polymer (B'-1) was calculated to be 1/17 (5.6/94.4). The mass average molecular weight of the polymer (B'-1) determined by GPC according to method A was 18,700. The polymer (B'-1) was dissolved in perfluorobenzene, and ¹⁹F-NMR was measured, whereby it was found that the structural unit derived from PDD having iodine atom bonded, is present, and it was confirmed that the polymer (B'-1) is a branched molecular chain. The ratio of the structural unit derived from PDD having iodine atom bonded, to the structural unit derived from 8IVE having no iodine atom dissociated, was found to be 46:54, from the ratio of the peak at from -42 to -47 ppm to the peak in the vicinity of -62 ppm, of the ¹⁹F-NMR (the chemical shift of perfluorobenzene was set to be at -162.7 ppm).

Into a Hastelloy autoclave having an internal volume of 230 mL, 5.37 g of the polymer (B'-1) and199.89 g of BSVE-2E were charged, and after closing, the gas phase was replaced with nitrogen. The temperature was raised to 40°C, followed by stirring for 12 hours to dissolve the polymer (B'-1). After cooling to room temperature, 14.0 mg of IPP dissolved in 1.02 g of HFC-52-13p was added, and using liquid nitrogen, freeze-deaeration was repeated twice. While raising the temperature, TFE was continuously introduced, and the temperature was held constant at 40°C, and the pressure was held constant at 0.50 MPaG. Upon expiration of 20 minutes after the temperature was stabilized at 40°C, consumption of TFE started. Upon expiration of 5.7 hours when the TFE supply amount at the constant pressure reached 2.71 g, the autoclave was cooled to 10°C. TFE in the autoclave was purged to terminate the reaction.

The product was diluted with 11 g of HCFC-225, and 162 g of HCFC-141b was added, to precipitate the polymer, followed by filtration. The polymer was again dissolved in 94 g of HCFC-225, and precipitated by addition of 36 g of n-hexane and 83 g of HCFC-141b, followed by filtration. The operation of dissolution and precipitation was conducted again by using the same amounts of the solvents. Then, the polymer was dried under reduced pressure overnight at 80°C, to obtain10.6 g of a polymer (F-1) being a branched multi-segmented copolymer comprising a precursor of the segment (A) composed of a structural unit derived from TFE and a structural unit derived from BSVE-2E, and the segment (B) composed of a structural unit derived from PDD and a structural unit derived from 8IVE.

The molar ratio of structural units in the segment (A) obtained from ¹⁹F-NMR (solvent: perfluorobenzene) of the polymer (F-1) was TFE/BSVE-2E = 79.4/20.6, and the Ion exchange capacity of the segment was calculated to be 1.98 meq/g dry resin. The ion exchange capacity of a polymer (F-1) obtained by the titration method was 1.38 meq/g dry resin.

The peak of the GPC chart measured in accordance with method A was one, and the mass average molecular weight of the polymer (F-1) was 124,000. Since the value of the ion exchange capacity of the segment (B) is a 0 meq/g dry resin, using the value of the ion exchange capacity of the segment (A) and the value of the ion-exchange capacity of the polymer (F-1), the mass ratio of the segments (A) to the segment (B) is calculated to be 69.7:30.3.

By immersing the polymer (F-1) in an aqueous solution of 80°C containing 20 mass% of methanol and 15 mass% of potassium hydroxide for 200 hours, -SO₂F groups in the polymer (F-1) were hydrolyzed and converted to -SO₃K groups. The polymer was immersed in a 3N hydrochloric acid solution of 80°C for 30 minutes, and was immersed in ultrapure water of 80°C for 15 minutes. The cycle of immersion in the aqueous hydrochloric acid solution and immersion in ultrapure water was carried out a total of five times. Then, washing with ultrapure water was repeated twice, followed by drying. A polymer (H-1) was obtained, wherein -SO₃K groups in the polymer were converted to sulfonic acid groups.

To 2.80 g of the polymer (H-1), 12.8 g of ethanol was added, and using an autoclave, the mixture was stirred at 100°C for 240 minutes. 4.3 g of ethanol was added, followed by further stirring at 100°C for 120 minutes. 17.0 g of ultrapure water was added and further stirred at 100°C for 90 minutes. After cooling, using filter paper (Advantec Toyo Co., Ltd., PF040), pressure filtering was conducted. A liquid composition (1) was obtained, wherein the polymer (H-1) was dispersed in a mixed solvent of water and ethanol (water/ethanol = 50/50 mass ratio), at a concentration of 7.6 mass%. The liquid composition (1) was a dispersion with a little white turbidity. Even when left to stand at room temperature for 3 months, the polymer (H-1) did not sediment, and thus, a stable dispersion was obtained.

By adding ultrapure water, the liquid composition (1) was diluted to a solid content concentration of 0.1 mass%, and left to stand for 16 hours to prepare a sample. Using a fiber optic dynamic light scattering photometer (FDLS-3000, manufactured by Otsuka Electronics Co.), the scattering intensity of the sample was measured under conditions of temperature: 25°C, sampling time: 100 psec, number of channels: 1024, number of integrations: 100 times, and from the obtained autocorrelation function, the average particle size of the polymer (H-1) in the liquid composition was calculated by the Contin method analysis, and was found to be 3.5 µm.

### (Ex. 2) Synthesis of PDD/TFE/BSVE-2E random copolymer and preparation of liquid composition having its acid-type polymer dispersed therein

Into a Hastelloy autoclave having an internal volume of 230 mL, 18.08 g of PDD, 105.04 g of BSVE-2E, and 37.3 mg of PFB dissolved in 1.48 g of HCFC-225cb were charged, and by using liquid nitrogen, freeze-degassing was repeated twice. Then, by introducing 65.06 g of TFE, and adjusting the temperature to 22°C, the reaction was conducted for 24 hours.

The product was diluted with 356 g of HFC-52-13p, and then, 413 g of methanol was added to precipitate the polymer, followed by filtration. The polymer was dissolved again in 315 g of HFC-52-13p and precipitated by the addition of 348 g of methanol, followed by filtration. The operation of dissolution and precipitation was conducted again by using the same amounts of the solvents. Then, the polymer was dried under reduced pressure overnight at 80°C, to obtain 28.0 g of the polymer (F'-2) being a random copolymer composed of the structural unit derived from PDD, the structural unit derived from TFE and the structural unit derived from BSVE-2E. The molar ratio of the respective structural units in a polymer (F'-2) obtained from the analytical results of ¹⁹F-NMR (solvent: perfluorobenzene), was PDD/TFE/BSVE-2E = 49.9/29.2/20.9. The ion exchange capacity of the polymer (F'-2) calculated from said ratio, was 1.49 meq/g dry resin. The mass average molecular weight of the polymer (F'-2) obtained by GPC according to method A was 449,000.

In the same manner as in Ex. 1 except that the time for the hydrolysis treatment was changed to 16 hours, -SO₂F groups in the polymer (F'-2) were hydrolyzed and converted to -SO₃K groups. Then, in the same manner as in Ex. 1, -SO₃K groups were converted to sulfonic acid groups to obtain a polymer (H'-2).

To 25.06 g of the polymer (H'-2), 39.4 g of ultrapure water and 44.5 g of ethanol were added, followed by stirring at 110°C for 360 minutes by using an autoclave. After cooling, using filter paper (Advantec Toyo Co., Ltd., PF040), pressure filtration was conducted. A liquid composition (2) was obtained wherein the polymer (H'-2) was dispersed in a mixed solvent of water and ethanol (water/ethanol = 47/53 mass ratio), at a concentration of 23.0 mass%. The liquid composition (2) was a colorless transparent dispersion.

### (Ex. 3) Synthesis of block copolymer comprising segment composed of a structural unit derived from SMD-E4 and segment composed of a structural unit derived from PDD, and preparation test of liquid composition having its acid-type polymer dispersed therein

Into a four-necked glass flask having an internal volume of 50 mL and equipped with a magnetic stirrer, a sheath tube and a Dimroth condenser, 7.18 g of SMD-E4, 4.7 mg of I₂, 17.17 g of HCFC-225cb and 17.1 mg of IPP were charged, and using liquid nitrogen, freeze-deaeration was repeated twice. By adjusting the temperature to 40°C, the reaction was conducted for 11.5 hours.

The product was diluted with 23 g of HCFC-225, and 71 g of n-hexane was added to precipitate the polymer, followed by filtration. The polymer was again dissolved in 26 g of HCFC-225 and precipitated by adding 76 g of n-hexane, followed by filtration. The operation of dissolution and precipitation was conducted again by using the same amounts of the solvents. Then, the polymer was dried under reduced pressure overnight at 80°C, to obtain 5.0 g of a polymer (A'-3) having an iodine atom at a main chain terminal. The mass average molecular weight of the polymer (A'-3) obtained by GPC according to method A was 96,900.

Into a four-necked glass flask having an inner volume of 50 mL and equipped with a magnetic stirrer, a sheath tube and a Dimroth condenser, 3.05 g of the polymer (A'-3), 3.18 g of PDD, 17.68 g of HCFC-225cb and 12.0 mg of PFB, were charged, and using liquid nitrogen, freeze-deaeration was repeated twice. By adjusting the temperature to 21°C, the reaction was conducted for 3.9 hours.

The product was diluted with 115 g of HCFC-225, and then, 172 g of n-hexane was added to precipitate a polymer, followed by filtration. The polymer was dissolved again in 37 g of HCFC-225 and precipitated by adding 153 g of n-hexane, followed by filtration. The operation of dissolution and precipitation was conducted again by using the same amounts of the solvents. Then, the polymer was dried under reduced pressure overnight at 80°C, to obtain 4.1 g of a polymer (F'-3) being an AB type block copolymer comprising a precursor of a segment (A) composed of a structural unit derived from SMD-E4, and a segment (B) composed of a structural unit derived from PDD. The ion exchange capacity of the polymer (F'-3) was 1.57 meq/g dry resin. The mass average molecular weight of the polymer (F'-3) obtained by GPC according to method A was 117,000.

By immersing the polymer (F'-3) in an aqueous solution of 95°C containing 20 mass% of potassium hydroxide for 200 hours, -SO₂F groups in the polymer (F'-3) were hydrolyzed and converted to -SO₃K groups. Then, the conversion of -SO₃K groups to sulfonic acid groups, was carried out in the same manner as in Ex. 1, to obtain a polymer (H'-3).

To 0.8 g of the polymer (H'-3), 4.0 g of ethanol was added, followed by stirring at 120°C for 120 minutes by using an autoclave, but the polymer (H'-3) did not dissolve. Further, after raising the temperature to 160°C, stirring was continued for 1 hour, but the polymer (H'-3) did not dissolve. At that temperature, further, 11.0 g of ethanol was added, followed by stirring for one hour, but the polymer (H'-3) did not dissolve, and 15.0 g of ultrapure water was gradually added, but the polymer (H '-3) did not dissolve.

### (Ex. 4) Block copolymer comprising TFE/PSVE segment and PDD segment

A polymer being a BAB type block copolymer comprising a precursor of a segment (A) composed of a structural unit derived from TFE and a structural unit derived from PSVE, and segments (B) composed of a structural unit derived from PDD, as described in Examples in Patent Document 2, was designated as a polymer (F'-4). The ion exchange capacity of the polymer (F'-4) was 0.99 meq/g dry resin. The number average molecular weight of this polymer was about 20,000. As compared to the number average molecular weight of 61,000 of the polymer (F-1), this number average molecular weight is quite small. Here, the number average molecular weight of the polymer (F-1) is a value obtained together with the mass average molecular weight by the GPC measurement of the above-mentioned polymer (F-1).

### (Preparation of membrane of polymer (H))

### Membrane of the polymer (H-1):

By adding the polymer (F-1) to HCFC-225, followed by stirring overnight at 40°C, a solution containing the polymer (F-1) at a concentration of 7.5 mass% was prepared. Using the solution, a film was prepared by a casting method and dried to remove the solvent, followed by pressing at 260°C to obtain a membrane of the polymer (F-1).

By immersing the membrane of the polymer (F-1) in an aqueous solution of 80°C containing 20 mass% of methanol and15 mass% of potassium hydroxide for 200 hours, -SO₂F groups in the membrane of the polymer (F-1) were hydrolyzed and converted to - SO₃K groups. Conversion of the -SO₃K groups into sulfonic acid groups was conducted in the same manner as in Ex. 1 to obtain a membrane of the polymer (H-1) having a thickness of 124 µm.

### Membrane of the polymer (H'-2):

The polymer (F'-2) was pressed to a film at a pressing temperature of 260°C to obtain a membrane of the polymer (F'-2).

By immersing the membrane of the polymer (F'-2) in an aqueous solution of 80°C containing 20 mass% of methanol and15 mass% of potassium hydroxide for 16 hours, - SO₂F groups in the membrane of the polymer (F'-2) were hydrolyzed and converted to - SO₃K groups. Conversion of the -SO₃K groups to sulfonic acid groups was conducted in the same manner as in Ex. 1 to obtain a membrane of the polymer (H'-2) having a thickness of 110 µm.

### Membrane of the polymer (H'-5):

A cast membrane obtained by heat-treating at 160°C for 30 minutes of the polymer (H'-5) (ion exchange capacity: 1.1 meq/g dry resin) obtained by converting - SO₂F groups in the polymer (F'-5) being a random copolymer of TFE and PSVE, to sulfonic acid groups, was prepared.

### (Evaluation of oxygen permeability)

With respect to the membrane of the polymer (H-1) (Ex. 1), the membrane of the polymer (H'-2) (Ex. 2) and the membrane of the polymer (H'-5), the humidity dependency of the oxygen permeation coefficient at 80°C was measured based on a gas chromatographic method of equal pressure method (supplying humidified oxygen under a pressure of 10⁵Pa to one side of the membrane and humidified helium under a pressure of 10⁵Pa to the other side).

The humidity dependency of the relative value of the oxygen permeability coefficient of the membrane of the polymer (H-1) (Ex.1) and of the membrane of the polymers (H'-2) (Ex. 2) to the oxygen permeability coefficient of the membrane of the polymer (H'-5) is shown in Fig. 6.

Also with respect to the membrane of the polymer (H'-4) obtainable by hydrolyzing and acid-form conversion of the polymer (F'-4) in Ex. 4, the humidity dependency of the oxygen permeability coefficient was measured under the same conditions as in the above-mentioned equal pressure gas chromatography method as described in Patent Document 2, except that the measurement was conducted by changing the humidity. The humidity dependency of the relative value of the oxygen permeability coefficient of the membrane of the polymer (H'-4) (Ex. 4) to the oxygen permeability coefficient of the membrane of the polymer (H'-5), is also shown in Fig. 6.

The oxygen permeability coefficient increases in the order of the membrane of the polymer (H'-5) having no alicyclic structure; the membrane of the polymer (H'-2) (Ex. 2) being a random copolymer having a structural unit having an ionic group and a structural unit having an alicyclic structure; the membrane of the polymer (H'-4) (Ex. 4) being a linear block copolymer of segment (A) having an ionic group and segment (B) having an alicyclic structure; and the membrane of the polymer (H-1) (Ex. 1) being a branched multi-segmented copolymer of segment (A) having an ionic group, and segment (B) having an alicyclic structure. In the polymer (H'-2), the polymer (H'-4) and the polymer (H-1), the contents of the structural unit derived from PDD are, respectively, calculated to be 43 mass%, 56 mass% and 27 mass%, but the results showing that the polymer (H-1) of the present invention exhibits a high oxygen permeability despite the smallest content of the structural unit derived from PDD, were obtained.

### (Measurement of dynamic viscoelasticity (softening temperature))

With respect to the membrane of the polymer (H-1) (Ex. 1), the measurement of the dynamic viscoelasticity was conducted.

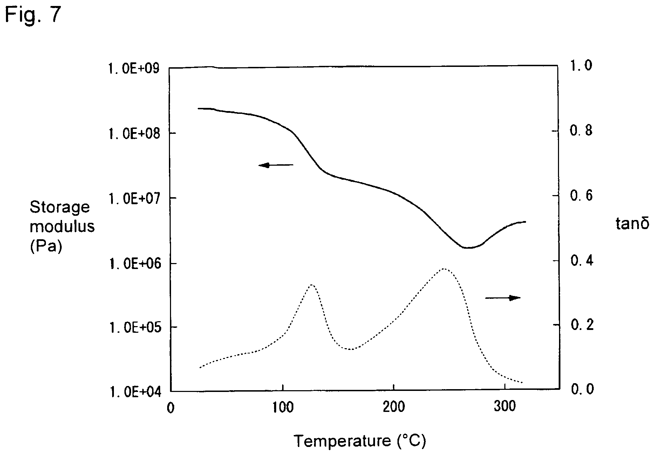

Using a dynamic viscoelasticity measuring device (DVA-225, manufactured by IT Keisoku Seigyo Co.), the measurements were conducted in a tensile mode under conditions of a sample width: 5.0 mm, a length between grips: 15 mm, measurement frequency: 1Hz, and a temperature raising rate: 2°C /min., to obtain the storage modulus and the tanδ (loss tangent), and the peak temperature of tanδ was adopted as the softening temperature. The temperature dependency of the storage modulus and tanδ of the membrane of the polymer (H-1) (Ex. 1) is shown in Fig 7.

The softening temperature (tanδ peak temperature) of the segment (A) of the membrane of the polymer (H-1) was 126°C, and the softening temperature (tanδ peak temperature) of the segment (B) was 249°C.

### (Ex. 5) Synthesis of TFE/PDD/BSVE-2E random copolymer and preparation of liquid composition having its acid-type polymer dispersed therein

Into a 0.5L autoclave, 61.86 g of PDD, 512.7 g of BSVE-2E and 5.746 g of a 3 mass% AK-225cb solution of PFB, were put, and using liquid nitrogen, freeze-degassing was conducted. Then, after introducing 39.79 g of TFE, the temperature was raised to 21°C to initiate the polymerization. The pressure at this time was 0.36 MPa (gauge pressure). The reaction was conducted at 21°C for 24 hours, and at the time when the pressure became 0.065 MPa (gauge pressure), the reaction was stopped. The polymerization solution was poured into hexane to coagulate the polymer, followed by washing three times with hexane. Then, vacuum drying was conducted overnight at 80°C. The yield was 105.0 g.

The polymer composition was obtained by ¹⁹F-NMR, and found to be TFE/PDD/BSVE-2E = 52.3/31.9/15.8 (molar ratio), and the ion-exchange capacity was 1.38meq./g. The mass average molecular weight measured by GPC according to method A was 623,000.

In the same manner as in Ex. 1, a polymer was obtained wherein -SO₂F groups had been converted to sulfonic acid groups in the polymer. Further, in the same manner as in Ex. 1, a liquid composition (5) was obtained wherein the polymer was dispersed in a mixed solvent of water and ethanol (water/ethanol = 55/45 mass ratio), at a concentration of 9.4 mass%.

### (Ex. 6) Preparation of membrane electrode assembly containing branched multi-segmented copolymer in the cathode catalyst layer, and its power generation evaluation

### (Synthesis of TFE/BSVE-2E/PSVE copolymer for anode and membrane, and preparation of liquid composition having its acid-type polymer dispersed therein)

An autoclave (internal capacity: 2,575 cm³, made of stainless steel) was flushed with nitrogen, followed by sufficient deaeration. Under vacuum, 68.67 g of BSVE-2E, 40.02 g of PSVE, 45.03 g of HCFC-225cb as a solvent, 6.96 mg of methanol and 68.2 mg of IPP as a radical initiator (Peroyl IPP, manufactured by NOF Corporation) were put, and the inside of the autoclave was evacuated to the vapor pressure.

The internal temperature was raised to 40°C and TFE was introduced to the autoclave, to adjust the pressure to be 0.42 MPaG (gauge pressure). By maintaining the temperature and pressure to be constant, polymerization was conducted for 6.5 hours. Then, the autoclave was cooled to terminate the polymerization, and the gas in the system was purged.

The reaction liquid was diluted with HCFC-225cb, and then HCFC-141b was added, to coagulate the polymer, followed by filtration.

The obtained polymer was stirred in HCFC-225cb, and then HCFC-141b was added to re-coagulate the polymer, followed by filtration. Re-coagulation was repeated twice. Then, the polymer was dried under reduced pressure overnight at 80°C, to obtain a polymer (F-6) being a copolymer of TFE, BSVE-2E and PSVE. The yield was 15.1 g, the ion-exchange capacity was 1.56 meq/g, and the molar ratio of structural units constituting the polymer was TFE/BSVE-2E/PSVE = 81.7/10.0/8.3.

In the same manner as in Ex. 1, a polymer (H-6) was obtained wherein -SO₂F groups in the polymer had been converted to sulfonic acid groups. Further, in the same manner as in Ex. 1, a liquid composition (6) was obtained wherein the polymer was dispersed in a mixed solvent of water and ethanol (water/ethanol = 60/40 mass ratio) at a concentration of 22 mass%.

### (Production of polymer electrolyte membrane)

The liquid composition (6) was applied on a sheet made of a copolymer (ETFE) of ethylene and TFE by means of a die coater, dried at 80°C for 30 minutes and further subjected to heat treatment at 190°C for 30 minutes, to form a polymer electrolyte membrane having a thickness of 20 µm.

### (Production of cathode catalyst layer)

To 3 g of a supported catalyst having 50 mass% of platinum supported on carbon powder, 10 g of water was added, followed by irradiation with ultrasonic waves for 10 minutes to obtain a dispersion of the catalyst. To the dispersion of the catalyst, 25 g of the liquid composition (1) was added, and further, 10 g of ethanol was added to bring the solid concentration to be about 10 mass%, to obtain a catalyst layer-forming liquid. The liquid was applied on the above electrolyte membrane, dried at 80°C for 30 minutes, and further heat-treated at 165°C for 30 minutes, to form a cathode catalyst layer having an amount of platinum of 0.1 mg/cm².

### (Production of anode catalyst layer)

To 5 g of a supported catalyst having 20 mass% of platinum supported on carbon powder, 30 g of water was added, followed by irradiation with ultrasonic waves for 10 minutes to obtain a dispersion of the catalyst. To the dispersion of the catalyst, 14.5 g of the liquid composition (6) was added, and further 32.5 g of ethanol was added to bring the solid content concentration to be about 10 mass%, to obtain a catalyst layer-forming liquid. The liquid was applied on a sheet separately prepared and made of a copolymer of ethylene and TFE (trade name: Aflex 100N, manufactured by Asahi Glass Company, thickness 100 µm) (hereinafter referred to as ETFE sheet), dried at 80°C for 30 minutes and further subjected to heat treatment at 165°C for 30 minutes, to form an anode catalyst layer having an amount of platinum of 0.05 mg/cm².

### (Production of membrane electrode assembly)

After peeling the electrolyte membrane having a cathode catalyst layer formed on one side/ETFE sheet, on the opposite side of the cathode catalyst layer of the electrolyte membrane, the ETFE sheet-attached anode catalyst layer was bonded and heat pressed under conditions of a press temperature of 160°C, a pressing time of 5 minutes and a pressure of 3 MPa, followed by peeling off the ETFE sheet from the anode catalyst layer, to obtain a membrane catalyst layer assembly having an electrode area of 25 cm².

On a gas diffusion layer made of carbon paper, a carbon layer composed of carbon black and polytetrafluoroethylene was formed.

The membrane catalyst layer assembly was sandwiched between the gas diffusion layers so that the carbon layer and the catalyst layer would be in contact, to obtain a membrane electrode assembly.

### (Evaluation of power generation)

The membrane electrode assembly was assembled in a cell for power generation, and evaluation of the power generation characteristics was carried out under the following conditions.

While maintaining the temperature of the membrane electrode assembly at 80°C, hydrogen (utilization ratio 50%) was supplied to the anode, and air (utilization ratio 50%) was supplied to the cathode, respectively, under a pressure of 150 kPa (absolute pressure). Both hydrogen and air were supplied as humidified to have a relative humidity of 100%RH, and the cell voltages at the time of a current density of 1.0A/cm² and 2.0A/cm² were recorded. The results are shown in Table 1.

### (Ex. 7) Evaluation of power generation of membrane electrode assembly using TFE/PDD/BSVE-2E random copolymer in cathode catalyst layer

The membrane electrode assembly was prepared and the evaluation of the power generation was carried out in the same manner as in Ex. 6 except that the liquid composition (5) was used instead of the liquid composition (1) in the cathode catalyst layer. The results are shown in Table 1.

**TABLE 1**

| | Cell voltage | |
|---|---|---|
| | Current density 1.0 A/cm² | Current density 2.0 A/cm² |
| Ex. 6 | 0.584 V | 0.443 V |
| Ex. 7 | 0.594 V | 0.385 V |

As is evident from Table 1, it has been found that the electrolyte material comprising a branched molecular chain has high oxygen permeability, and the membrane electrode assembly using such an electrolyte material in the cathode catalyst layer has, as compared to the membrane electrode assembly using an electrolyte material not containing a branched molecular chain, a remarkably excellent electric power generation characteristics at the high current density region, although at the low current density region, the properties are substantially the same.

### (Ex. 8) Synthesis Example of fluorinated branched polymer using BVE

Into a Hastelloy autoclave having an internal volume of 120 mL, 3.67 g (7.5 mmol) of 8IVE was charged. A liquid having 0.515 g (2.50 mmol) of IPP dissolved in about 3 g of HFC-52-13p, and 18.77 g (67.5 mmol) of BVE, were added and finally HFC-52-13p was added. The total amount of added HFC-52-13p was 45.04 g. Using liquid nitrogen, freeze-deaeration was repeated twice, then the temperature was returned to about 0°C, and then nitrogen gas was introduced until 0.3 MPaG. The autoclave was set in a water bath, and while maintaining the internal temperature at 45°C, stirring was conducted for 7 hours. After the stirring, the autoclave was immersed in ice water and cooled to at most 20°C to stop the reaction.

The reaction liquid was transferred to a beaker from the autoclave, and about 40 g of HFC-52-13p was added. About 60 g of n-hexane was added and stirred, and left to stand overnight. The content in the beaker was transferred to an eggplant flask, and the solvent was distilled off by an evaporator, followed by vacuum drying at 60°C for 162 hours, to obtain 9.64 g a solid content (polymer (B'-2)). The mass average molecular weight measured by GPC according to method B was 10,900.

This polymer was dissolved in perfluorobenzene, and the ¹⁹F-NMR (the chemical shift of the perfluorobenzene was set to be -162.7 ppm) was measured, whereby the ratio of the number of terminals of BVE units attached to the iodine atom, to the number of -OCF₂CF₂-I groups based on 8IVE units having no iodine atom dissociated, was found to be 20:80 from the ratio of the peak at from -44 to -54 ppm to the peak in the vicinity of -62 ppm, and thus, it was confirmed that this polymer contains a branched molecular chain. The content of iodine atoms obtained by elemental analysis was 4.2 mass%, and from this value, the molar ratio of the structural unit derived from the polymer 8IVE to the structural unit derived from PDD (8IVE/BVE) was calculated to be 1/9.

### INDUSTRIAL APPLICABILITY

The electrolyte material of the present invention is useful as an electrolyte material for polymer electrolyte fuel cells. Further, it can be used for other applications (proton selectively permeable membranes to be used for water electrolysis, hydrogen peroxide production, ozone production, waste acid recovery, etc.; diaphragms for brine electrolysis or redox flow batteries, cation exchange membranes for electrodialysis to be used for desalination or salt production, dehumidifying membranes, humidifying membranes, acid catalysts for chemical reactions, sensors, gas separation membranes, etc.).

### REFERENCE SYMBOLS

1: fluoropolymer (H), 2: segment (B), 2': polymer (B'), 3: segment (A), 4: branch point, 4': branch point, 5: structural unit (u3), 6: terminal portion, 10: membrane electrode assembly, 11: catalyst layer, 12: gas diffusion layer, 13: anode, 14: cathode, 15: polymer electrolyte membrane, 16: carbon layer

## Claims

1. An electrolyte material comprising a fluoropolymer (H) having a structural unit (u1) having an ionic group and a structural unit (u2) having an alicyclic structure but excluding one having an ionic group; **characterized in that**
the fluoropolymer (H) comprises a branched molecular chain,
the fluoropolymer (H) has a segment (A) composed of a molecular chain having a structural unit (u1) having an ionic group, and a segment (B) comprising a molecular chain having a structural unit (u2) having an alicyclic structure, and
the ion exchange capacity of the segment (B) is smaller than the ion exchange capacity of the segment (A).

2. The electrolyte material according to Claim 1, wherein the segment (B) has no structural unit (u1) having an ionic group.

3. The electrolyte material according to Claim 1 or 2, wherein the segment (B) is composed of a branched molecular chain.

4. The electrolyte material according to any one of Claims 1 to 3, wherein the segment (B) is formed by polymerizing a monomer component (β) containing a monomer component of either one or both of a monomer (m2) having an alicyclic structure but excluding one having an ionic group or its precursor group and a monomer (m2') capable of forming an alicyclic structure by cyclopolymerization but excluding one having an ionic group or its precursor group, and a monomer (m3) having an iodine atom.

5. The electrolyte material according to any one of Claims 1 to 4, wherein the fluoropolymer (H) is one obtained by polymerizing a monomer component (α) containing a monomer (m1) having a precursor group for an ionic group, in the presence of a polymer (B') formed by polymerizing a monomer component (β) containing a monomer component of either one or both of a monomer (m2) having an alicyclic structure but excluding one having an ionic group or its precursor group and a monomer (m2') capable of forming an alicyclic structure by cyclopolymerization but excluding one having an ionic group or its precursor group, and a monomer (m3) having an iodine atom, and then converting the precursor group for an ionic group to the ionic group.

6. The electrolyte material according to any one of Claims 1 to 5, wherein the fluoropolymer (H) is a perfluoropolymer.

7. The electrolyte material according to any one of Claims 1 to 6, wherein the ion-exchange capacity of the segment (A) is at least 1 meq/g dry resin.

8. The electrolyte material according to any one of Claims 1 to 7, wherein the ion exchange capacity of the fluoropolymer (H) is from 0.6 to 2.5 meq/g dry resin.

9. The electrolyte material according to any one of Claims 1 to 8, wherein the structural unit (u2) having an alicyclic structure is at least one member selected from the group consisting of a structural unit represented by the following formula (u21) and a structural unit represented by the following formula (u22): 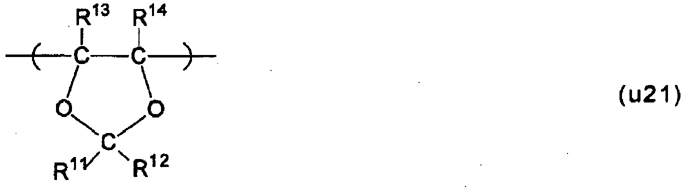 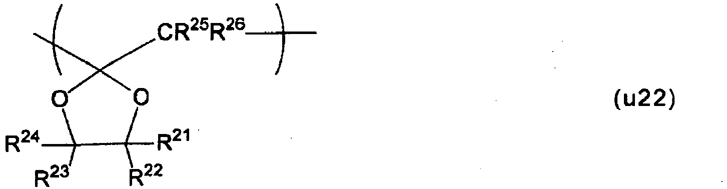
wherein R¹¹ and R¹² are each independently a fluorine atom or a C₁₋₅ perfluoroalkyl group,
R¹³ and R¹⁴ are each independently a fluorine atom, a C₁₋₅ perfluoroalkyl group or a C₁₋₅ perfluoroalkoxy group, and
R²¹ to R²⁶ are each independently a monovalent perfluorinated organic group which may have an ether bonding oxygen atom, or a fluorine atom.

10. The electrolyte material according to Claim 9, wherein the structural unit (u2) having an alicyclic structure contains a structural unit represented by the formula (u21), and the proportion of the structural unit represented by the formula (u21) is at least 70 mass% in all structural units (100 mass%) constituting the segment (B).

11. The electrolyte material according to any one of Claims 1 to 10, wherein the softening temperature of the segment (A) is at most 180°C.

12. The electrolyte material according to any one of Claims 1 to 11, wherein the softening temperature of the segment (B) is higher than the softening temperature of the segment (A).

13. The electrolyte material according to any one of Claims 1 to 12, wherein the ionic group is a sulfonic acid group or its salt.

14. A liquid composition comprising
a dispersion medium containing either one or both of water and an alcohol, and
the electrolyte material as defined in any one of Claims 1 to 13, dispersed in the dispersion medium.

15. A membrane electrode assembly for a polymer electrolyte fuel cell comprising an anode having a catalyst layer,
a cathode having a catalyst layer, and
a polymer electrolyte membrane disposed between the anode and the cathode, wherein
the catalyst layer of the cathode contains the electrolyte material as defined in any one of Claims 1 to 13.

16. A fluorinated branched polymer composed of a branched molecular chain having a structural unit (u2) having an alicyclic structure but excluding one having an ionic group.

17. The fluorinated branched polymer according to Claim 16, which is obtained by polymerizing a monomer component (β) containing either one or both of a monomer (m2) having an alicyclic structure but excluding one having an ionic group or its precursor group and a monomer (m2') capable of forming an alicyclic structure by cyclopolymerization but excluding one having an ionic group or its precursor group, and a monomer (m3) having an iodine atom.

18. The fluorinated branched polymer according to Claim 16 or 17, which is a perfluoropolymer.

19. The fluorinated branched polymer according to any one of Claims 16 to 18, wherein the structural unit (u2) having an alicyclic structure contains a structural unit represented by the following formula (u21), and the proportion of the structural unit represented by the formula (u21) is at least 70 mass% in all structural units (100 mass%) constituting the fluorinated branched polymer: 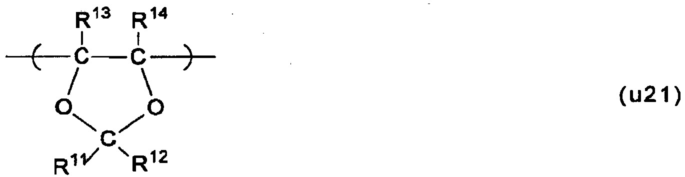
wherein R¹¹ and R¹² are each independently a fluorine atom or a C₁₋₅ perfluoroalkyl group, and
R¹³ and R¹⁴ are each independently a fluorine atom, a C₁₋₅ perfluoroalkyl group or a C₁₋₅ perfluoroalkoxy group.

## Patentansprüche

1. Elektrolytmaterial, umfassend ein Fluorpolymer (H), aufweisend eine strukturelle Einheit (u1) mit einer ionischen Gruppe und eine strukturelle Einheit (u2) mit einer alicyclischen Struktur, jedoch nicht eine mit einer ionischen Gruppe, **dadurch gekennzeichnet, dass**
das Fluorpolymer (H) eine verzweigte Molekülkette umfasst,
das Fluorpolymer (H) ein Segment (A), bestehend aus einer Molekülkette, aufweisend eine strukturelle Einheit (u1) mit einer ionischen Gruppe, und ein Segment (B), umfassend eine Molekülkette, aufweisend eine strukturelle Einheit (u2) mit einer alicyclischen Struktur, aufweist und
die Ionenaustauschkapazität des Segments (B) kleiner ist als die Ionenaustauschkapazität des Segments (A).

2. Elektrolytmaterial nach Anspruch 1, wobei das Segment (B) keine strukturelle Einheit (u1) mit einer ionischen Gruppe aufweist.

3. Elektrolytmaterial nach Anspruch 1 oder 2, wobei das Segment (B) aus einer verzweigten Molekülkette besteht.

4. Elektrolytmaterial nach einem der Ansprüche 1 bis 3, wobei das Segment (B) durch Polymerisieren einer Monomerkomponente (β), enthaltend eine Monomerkomponente von entweder einem oder beiden von einem Monomer (m2) mit einer alicyclischen Struktur, jedoch nicht einem mit einer ionischen Gruppe oder deren Vorläufergruppe, und einem Monomer (m2'), welches imstande ist, eine alicyclische Struktur durch Cyclopolymerisation zu bilden, jedoch nicht einem mit einer ionischen Gruppe oder deren Vorläufergruppe, und eines Monomers (m3) mit einem lodatom, gebildet ist.

5. Elektrolytmaterial nach einem der Ansprüche 1 bis 4, wobei das Fluorpolymer (H) eines, erhalten durch Polymerisieren einer Monomerkomponente (α), enthaltend ein Monomer (m1) mit einer Vorläufergruppe für eine ionische Gruppe, in der Gegenwart eines Polymers (B'), gebildet durch Polymerisieren einer Monomerkomponente (β), enthaltend eine Monomerkomponente von entweder einem oder beiden von einem Monomer (m2) mit einer alicyclischen Struktur, jedoch nicht einem mit einer ionischen Gruppe oder deren Vorläufergruppe, und einem Monomer (m2'), welches imstande ist eine alicyclische Struktur durch Cyclopolymerisation zu bilden, jedoch nicht einem mit einer ionischen Gruppe oder deren Vorläufergruppe, und eines Monomers (m3) mit einem lodatom, und anschließendem Umwandeln der Vorläufergruppe für eine ionische Gruppe in eine ionische Gruppe, ist.

6. Elektrolytmaterial nach einem der Ansprüche 1 bis 5, wobei das Fluorpolymer (H) ein Perfluorpolymer ist.

7. Elektrolytmaterial nach einem der Ansprüche 1 bis 6, wobei die Ionenaustauschkapazität des Segments (A) mindestens 1 meq/g Trockenharz beträgt.

8. Elektrolytmaterial nach einem der Ansprüche 1 bis 7, wobei die Ionenaustauschkapazität des Fluorpolymers (H) von 0,6 bis 2,5 meq/g Trockenharz beträgt.

9. Elektrolytmaterial nach einem der Ansprüche 1 bis 8, wobei die strukturelle Einheit (u2) mit einer alicyclischen Struktur mindestens ein Mitglied, ausgewählt aus der Gruppe, bestehend aus einer strukturellen Einheit, dargestellt durch die nachstehende Formel (u21), und einer strukturellen Einheit, dargestellt durch die nachstehende Formel (u22), ist: 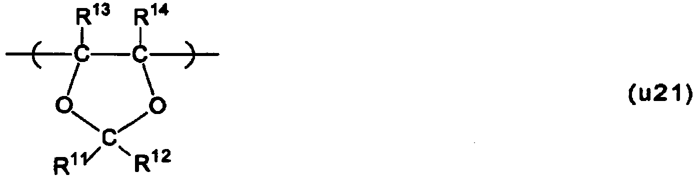 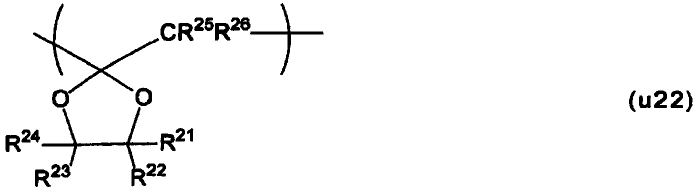
wobei R¹¹ und R¹² jeweils unabhängig ein Fluoratom oder eine C₁₋₅-Perfluoralkylgruppe sind,
R¹³ und R¹⁴ jeweils unabhängig ein Fluoratom, eine C₁₋₅-Perfluoralkylgruppe oder eine C₁₋₅-Perfluoralkoxygruppe sind und
R²¹ bis R²⁶ jeweils unabhängig eine einwertige perfluorierte organische Gruppe, welche ein Etherbindungssauerstoffatom aufweisen kann, oder ein Fluoratom sind.

10. Elektrolytmaterial nach Anspruch 9, wobei die strukturelle Einheit (u2) mit einer alicyclischen Struktur eine strukturelle Einheit, dargestellt durch die Formel (u21), enthält und der Anteil der strukturellen Einheit, dargestellt durch die Formel (u21), mindestens 70 Massen-% in allen strukturellen Einheiten (100 Massen-%), welche das Segment (B) bilden, beträgt.

11. Elektrolytmaterial nach einem der Ansprüche 1 bis 10, wobei die Erweichungstemperatur des Segments (A) höchstens 180°C beträgt.

12. Elektrolytmaterial nach einem der Ansprüche 1 bis 11, wobei die Erweichungstemperatur des Segments (B) höher ist als die Erweichungstemperatur des Segments (A).

13. Elektrolytmaterial nach einem der Ansprüche 1 bis 12, wobei die ionische Gruppe eine Sulfonsäuregruppe oder deren Salz ist.

14. Flüssigzusammensetzung, umfassend
ein Dispersionsmedium, enthaltend entweder eines oder beide von Wasser und einem Alkohol, und
das Elektrolytmaterial nach einem der Ansprüche 1 bis 13, dispergiert in dem Dispersionsmedium.

15. Membranelektrodenanordnung für eine Polymerelektrolytbrennstoffzelle, umfassend
eine Anode mit einer Katalysatorschicht,
eine Kathode mit einer Katalysatorschicht und
eine Polymerelektrolytmembran, angeordnet zwischen der Anode und der Kathode, wobei
die Katalysatorschicht der Kathode das Elektrolytmaterial nach einem der Ansprüche 1 bis 13 enthält.

16. Fluoriertes verzweigtes Polymer, bestehend aus einer verzweigten Molekülkette, aufweisend eine strukturelle Einheit (u2) mit einer alicyclischen Struktur, jedoch nicht eine mit einer ionischen Gruppe.

17. Fluoriertes verzweigtes Polymer nach Anspruch 16, welches durch Polymerisieren einer Monomerkomponente (β), enthaltend entweder eines oder beide von einem Monomer (m2) mit einer alicyclischen Struktur, jedoch nicht einem mit einer ionischen Gruppe oder deren Vorläufergruppe, und einem Monomer (m2'), welches imstande ist, eine alicyclische Struktur durch Cyclopolymerisation zu bilden, jedoch nicht einem mit einer ionischen Gruppe oder deren Vorläufergruppe, und eines Monomers (m3) mit einem lodatom, erhalten ist.

18. Fluoriertes verzweigtes Polymer nach Anspruch 16 oder 17, welches ein Perfluorpolymer ist.

19. Fluoriertes verzweigtes Polymer nach einem der Ansprüche 16 bis 18, wobei die strukturelle Einheit (u2) mit einer alicyclischen Struktur eine strukturelle Einheit, dargestellt durch die nachstehende Formel (u21), enthält und der Anteil der strukturellen Einheit, dargestellt durch die Formel (u21), mindestens 70 Massen-% in allen strukturellen Einheiten (100 Massen-%), welche das fluorierte verzweigte Polymer bilden, beträgt: 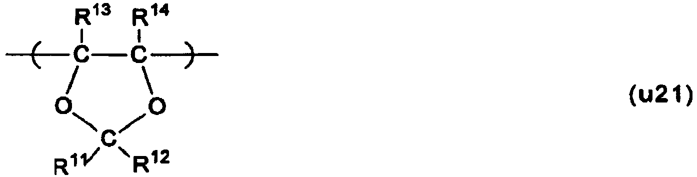
wobei R¹¹ und R¹² jeweils unabhängig ein Fluoratom oder eine C₁₋₅-Perfluoralkylgruppe sind und
R¹³ und R¹⁴ jeweils unabhängig ein Fluoratom, eine C₁₋₅-Perfluoralkylgruppe oder eine C₁₋₅-Perfluoralkoxygruppe sind.

## Revendications

1. Matériau d'électrolyte comprenant un fluoropolymère (H) ayant un motif de structure (u1) ayant un groupe ionique et un motif de structure (u2) ayant une structure alicyclique mais à l'exclusion d'un ayant un groupe ionique, **caractérisé en ce que**
le fluoropolymère (H) comprend une chaîne moléculaire ramifiée,
le fluoropolymère (H) a un segment (A) composé d'une chaîne moléculaire ayant un motif de structure (u1) ayant un groupe ionique, et un segment (B) comprenant une chaîne moléculaire ayant un motif de structure (u2) ayant une structure alicyclique, et
la capacité d'échange d'ions du segment (B) est inférieure à la capacité d'échange d'ions du segment (A).

2. Matériau d'électrolyte selon la revendication 1, dans lequel le segment (B) n'a pas de motif de structure (u1) ayant un groupe ionique.

3. Matériau d'électrolyte selon la revendication 1 ou 2, dans lequel le segment (B) est composé d'une chaîne moléculaire ramifiée.

4. Matériau d'électrolyte selon l'une quelconque des revendications 1 à 3, dans lequel le segment (B) est formé par la polymérisation d'un composant monomère (β) contenant un composant monomère parmi l'un ou l'autre ou les deux parmi un monomère (m2) ayant une structure alicyclique mais à l'exclusion d'un ayant un groupe ionique ou son groupe précurseur et un monomère (m2') capable de former une structure alicyclique par cyclopolymérisation mais à l'exclusion d'un ayant un groupe ionique ou son précurseur, et un monomère (m3) ayant un atome d'iode.

5. Matériau d'électrolyte selon l'une quelconque des revendications 1 à 4, dans lequel le fluoropolymère (H) est l'un obtenu par la polymérisation d'un composant monomère (α) contenant un monomère (m1) ayant un groupe précurseur pour un groupe ionique, en présence d'un polymère (B') formé par la polymérisation d'un composant monomère (β) contenant un composant monomère parmi l'un ou l'autre ou les deux parmi un monomère (m2) ayant une structure alicyclique mais à l'exclusion d'un ayant un groupe ionique ou son groupe précurseur et un monomère (m2') capable de former une structure alicyclique par cyclopolymérisation mais à l'exclusion d'un ayant un groupe ionique ou son précurseur, et un monomère (m3) ayant un atome d'iode, et ensuite la conversion du groupe précurseur pour un groupe ionique en le groupe ionique.

6. Matériau d'électrolyte selon l'une quelconque des revendications 1 à 5, dans lequel le fluoropolymère (H) est un perfluoropolymère.

7. Matériau d'électrolyte selon l'une quelconque des revendications 1 à 6, dans lequel la capacité d'échange d'ions du segment (A) est au moins de 1 méq/g de résine sèche.

8. Matériau d'électrolyte selon l'une quelconque des revendications 1 à 7, dans lequel la capacité d'échange d'ions du fluoropolymère (H) est de 0,6 à 2,5 méq/g de résine sèche.

9. Matériau d'électrolyte selon l'une quelconque des revendications 1 à 8, dans lequel le motif de structure (u2) ayant une structure alicyclique est au moins un élément sélectionné dans le groupe constitué par un motif de structure représenté par la formule (u21) suivante et un motif de structure représenté par la formule (u22) suivante : 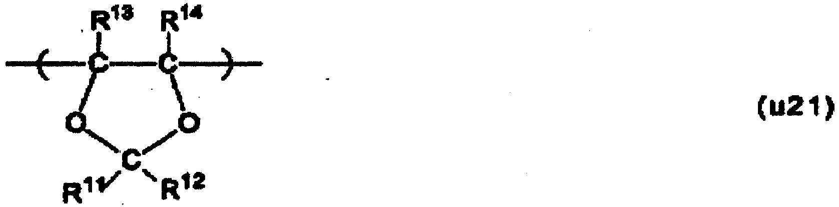 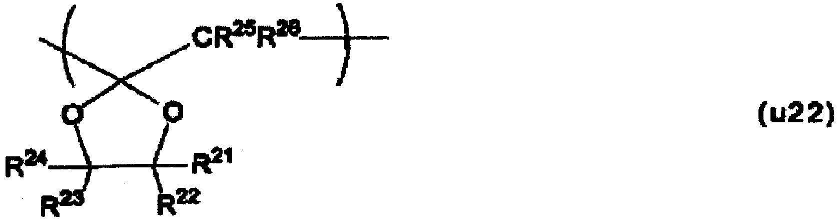
dans lesquelles R¹¹ et R¹² sont chacun indépendamment un atome de fluor ou un groupe perfluoroalkyle en C₁ à C₅,
R¹³ et R¹⁴ sont chacun indépendamment un atome de fluor, un groupe perfluoroalkyle en C₁ à C₅ ou un groupe perfluoroalcoxy en C₁ à C₅, et
R²¹ à R²⁶ sont chacun indépendamment un groupe organique perfluoré monovalent qui peut avoir un atome d'oxygène de liaison éther, ou un atome de fluor.

10. Matériau d'électrolyte selon la revendication 9, dans lequel le motif de structure (u2) ayant une structure alicyclique contient un motif de structure représenté par la formule (u21), et la proportion du motif de structure représenté par la formule (u21) est au moins de 70 % en masse dans tous les motifs de structure (100 % en masse) constituant le segment (B).

11. Matériau d'électrolyte selon l'une quelconque des revendications 1 à 10, dans lequel la température de ramollissement du segment (A) est au plus de 180 °C.

12. Matériau d'électrolyte selon l'une quelconque des revendications 1 à 11, dans lequel la température de ramollissement du segment (B) est supérieure à la température de ramollissement du segment (A).

13. Matériau d'électrolyte selon l'une quelconque des revendications 1 à 12, dans lequel le groupe ionique est un groupe acide sulfonique ou son sel.

14. Composition liquide comprenant
un milieu de dispersion contenant l'un ou l'autre ou les deux parmi l'eau et un alcool et
le matériau d'électrolyte tel que défini dans l'une quelconque des revendications 1 à 13, dispersé dans le milieu de dispersion.

15. Ensemble membrane-électrode pour une pile à combustible à électrolyte polymère comprenant
une anode ayant une couche de catalyseur,
une cathode ayant une couche de catalyseur, et
une membrane électrolytique polymère disposée entre l'anode et la cathode, dans lequel
la couche de catalyseur de la cathode contient le matériau d'électrolyte tel que défini dans l'une quelconque des revendications 1 à 13.

16. Polymère ramifié fluoré composé d'une chaîne moléculaire ramifiée ayant un motif de structure (u2) ayant une structure alicyclique mais à l'exclusion d'un ayant un groupe ionique.

17. Polymère ramifié fluoré selon la revendication 16, qui est obtenu par la polymérisation d'un composant monomère (β) contenant l'un ou l'autre ou les deux parmi un monomère (m2) ayant une structure alicyclique mais à l'exclusion d'un ayant un groupe ionique ou son groupe précurseur et un monomère (m2') capable de former une structure alicyclique par cyclopolymérisation mais à l'exclusion d'un ayant un groupe ionique ou son précurseur, et un monomère (m3) ayant un atome d'iode.

18. Polymère ramifié fluoré selon la revendication 16 ou 17, qui est un perfluoropolymère.

19. Polymère ramifié fluoré selon l'une quelconque des revendications 16 à 18, dans lequel le motif de structure (u2) ayant une structure alicyclique contient un motif de structure représenté par la formule (u21) suivante, et la proportion du motif de structure représenté par la formule (u21) est au moins de 70 % en masse dans tous les motifs de structure (100 % en masse) constituant le polymère ramifié fluoré : 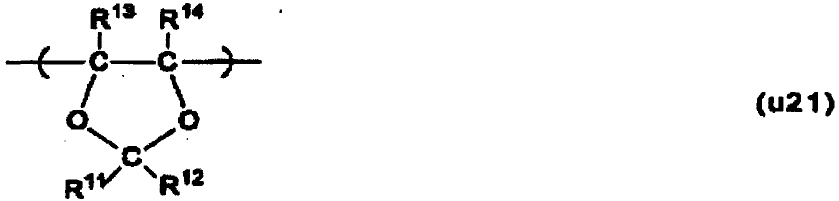
dans laquelle R¹¹ et R¹² sont chacun indépendamment un atome de fluor ou un groupe perfluoroalkyle en C₁ à C₅, et
R¹³ et R¹⁴ sont chacun indépendamment un atome de fluor, un groupe perfluoroalkyle en C₁ à C₅ ou un groupe perfluoroalcoxy en C₁ à C₅.
